(19) Europäisches Patentamt
European Patent Office
Office européen des brevets

(11) **EP 1 503 506 B1**

(12) **EUROPEAN PATENT SPECIFICATION**

(45) Date of publication and mention
of the grant of the patent:
**17.01.2007  Bulletin 2007/03**

(51) Int Cl.:
*H04B 1/16* (2006.01)    *H04Q 7/32* (2006.01)

(21) Application number: **04025921.0**

(22) Date of filing: **07.12.2000**

(54) **Method and apparatus for tracking the length of a sleep period in a mobile station**

Verfahren und Apparat zum Nachverfolgen der Länge einer Schlafperiode in einer Mobilstation

Procédé et appareil pour la surveillance de la durée d'une période de sommeil d'une station mobile

(84) Designated Contracting States:
**AT BE CH CY DE DK ES FI FR GB GR IE IT LI LU MC NL PT SE TR**

(43) Date of publication of application:
**02.02.2005  Bulletin 2005/05**

(62) Document number(s) of the earlier application(s) in accordance with Art. 76 EPC:
**00982520.9 / 1 340 321**

(73) Proprietor: **QUALCOMM INCORPORATED**
**San Diego, CA 92121-1714 (US)**

(72) Inventors:
• **Challa, Raghu**
**c/o Qualcomm Incorporated**
**San Diego, CA 92121-1714 (US)**
• **Barghouti, Ihab**
**c/o Qualcomm Incorporated**
**San Diego, CA 92121-1714 (US)**

(74) Representative: **Emde, Eric**
**Wagner & Geyer,**
**Gewürzmühlstrasse 5**
**80538 München (DE)**

(56) References cited:
EP-A- 0 924 947          DE-A- 10 012 635
US-A- 6 016 312          US-A- 6 088 602

Description

BACKGROUND OF THE INVENTION

**I. Field of the Invention**

The invention generally relates to mobile communication systems and in particular to techniques for compensating for frequency drift in a low frequency clock employed during a sleep period between paging slots within a mobile station of a mobile communications system.

**II. Description of the Related Art**

Certain state of the art wireless communication systems, such as Code Division Multiple Access (CDMA) Systems, employ slotted paging to allow mobile stations to conserve battery power. In a slotted paging system, paging signals are transmitted from a base station to particular mobile stations only within assigned paging slots separated by predetermined intervals of time. Accordingly, each individual mobile station may remain within a sleep mode during the period of time between consecutive paging slots without risk of missed paging signals. Whether any particular mobile station may switch from an active-mode to a sleep mode depends, however, upon whether the mobile station is currently engaged in any user activity such as processing input commands entered by the user or processing a telephonic communication on behalf of the user. Assuming though that the mobile station is not currently engaged in any processing on behalf of the user, the mobile station automatically powers down selected internal components during each period of time between consecutive slots. One example of a slotted paging system is disclosed in U.S. Patent No. 5,392,287, entitled "Apparatus and Method for Reducing Power Consumption in a Mobile Receiver", issued February 21, 1995, assigned to the assignee of the present invention.

Thus, within a slotted paging system, a mobile station reduces power consumption by disconnecting power from selected internal components during a sleep period between consecutive slots. However, even during the sleep period, the mobile station must reliably track the amount of elapsed time to determine when the next slot occurs to permit receive components of the mobile station to power up in time to receive any paging signals transmitted within the slot. One solution to this problem is to operate a high frequency clock throughout the sleep period and to track the amount of elapsed time using the high frequency clock. This solution allows the sleep period to be very precisely tracked using the high frequency clock. However, considerable power is consumed operating the high frequency clock and optimal power savings therefore are not achieved during the sleep period.

Hence, it would be desirable to instead employ an alternate low frequency, low power dock during the sleep period to further reduce power consumption. However, low frequency, low power clock signals typically suffer from considerable frequency drift such that the amount of elapsed time during the sleep period cannot be precisely determined. Frequency drift within a mobile station can be particularly significant as a result of temperature variations within the mobile station either as a result of changes in operation of components of the mobile station or as a result of ambient conditions of the mobile station. For example, during an extended telephone call, components of the mobile station may heat to 87 degrees Celsius. During an extended period of inactivity, the temperature of the components may cool to an ambient temperature of, perhaps, 25 degrees Celsius. Moreover, if the user places the mobile telephone in either a very hot or very cold location, the temperature change may be even more significant. Typical low power, low frequency clock signal generators are significantly affected by even relatively minor temperature changes and are even more strongly affected by such broad changes in temperature. Indeed, the amount of drift in a typical low power, low frequency clock signal is sufficiently great such that if used by itself to calculate the elapsed time, there is significant risk that the mobile station will not be reactivated in time to power up components to detect a paging signal transmitted within a next paging slot. Accordingly, important paging signals maybe missed possibly resulting in missed phone calls and the like.

Hence, when using a low-frequency dock signal to track time during a sleep period, the mobile station is typically configured to return to an active mode by activating a high frequency clock signal well in advance of a next expected paging slot to thereby avoid possible timing errors. Thus, for example, if the paging slots occur every 26.67 milliseconds, the mobile station may be programmed to activate the high frequency clock and to power up receive components after only, for example, 26 milliseconds of sleep to ensure that the next paging slot is not missed. Hence, optimal power savings are not achieved.

One technique that has been proposed for compensating for timing errors inherent in low frequency, low power clock signal generators is to adapt a length of a current sleep period based upon a timing accuracy of a previous sleep period. More specifically, if a previous sleep period was determined to be too long due to timing errors in the low power, low frequency clock generator, the mobile station is programmed to wake up earlier in the current sleep period. To determine whether a sleep period is too long or too short, the mobile station attempts to detect a unique word within a received paging signal, such as a message preamble which signifies the beginning of an assigned slot. If the unique word is not detected, the mobile station concludes that it woke up too late and therefore the sleep duration is decreased for subsequent sleep periods. If the unique word was properly received, the mobile station either woke up on time or wake up too early and the sleep duration is increased slightly for the subsequent sleep period. One problem with the aforementioned technique is that it assumes that any failure to detect the unique word is a result of a timing error. However, there may be other reasons besides the duration of the sleep period that the unique word was not correctly received and demodulated, such as poor communication channel quality conditions. Moreover, even if failure to detect the unique word was a result of a timing error rather than other communication errors, the system still does not precisely correct for errors in the low power, low frequency clock signal and therefore does not provide for optimal power savings.

A significant improvement is provided in U.S. Patent Application Serial No. 09/134,808, entitled "Synchronization of a Low Power Oscillator with a Reference Oscillator in a Wireless Communication Device Utilizing Slotted Paging", filed August 14, 1998 and assigned to the assignee of the present invention. In the aforementioned patent application, timing errors are corrected without relying upon the failure to receive portions of transmitted signals. Rather, the system includes a frequency error estimation unit for directly estimating the frequency of the low power, low frequency clock. In one example described in the patent application, the frequency error in the low frequency clock is determined by timing the low frequency clock using a high frequency clock during periods of time when the high frequency dock is active. For example, during each paging slot when the high frequency clock signal of the mobile station is activated, the frequency error in the low frequency clock is calculated based upon the high frequency clock. Additionally, the system operates to synchronize the activation of the high frequency clock very precisely to transitions in the low frequency clock signal to further reduce errors.

Although the system of the aforementioned patent application provides a significant improvement over systems which rely on the detection of unique words of signals transmitted to the mobile station, considerable room for improvement remains. To permit the mobile station to respond promptly to any keys that have been pressed by a user during a sleep period, it is often desirable to subdivide the sleep period into a sequence of sub-periods, also referred to herein as "catnaps". After each catnap, selected components of the mobile station are powered up sufficiently to detect whether a key on the keypad has been pressed and, if so, the sleep period is aborted and other components of the mobile station are powered up as needed to respond to the pressed key. The duration of the catnaps are typically not an interger number of cycles of the low frequency sleep mode clock. Accordingly, considerable truncation errors can occur if the low frequency clock, by itself, is employed to time the catnaps. Hence, it would be desirable to provide a system for timing sleep periods using a low frequency clock in such a manner to eliminate substantial truncation errors and aspects of the invention are directed to this end. Also, because the frequency error is calculated only while the mobile station is in an active-mode, it may not properly detect frequency errors occurring during extended sleep periods during which time the temperature of the low frequency clock signal generator decreases significantly. Accordingly, even with the improved system of the patent application, the high frequency clock signal must be usually be activated somewhat in advance of the next expected paging slot to account for remaining timing errors. Hence, optimal power savings are not achieved. It would be also preferable to provide a system wherein frequency drift is estimated effectively to permit an active mode high frequency clock to be turned on as close as possible to the next paging slot to permit maximum power savings during the sleep period and to permit easy reacquisition of a paging signal and it is to these ends that other aspects of the present invention are also directed.

Further attention is drawn to the document DE 100 12 635 A1, which refers to a system to reduce current consumption in a mobile telephone. This system uses a slow clock signal while the mobile is in a standby state. The circuit providing the slow clock signal is calibrated by the circuit providing the fast clock signal before it is deactivated.

Furthermore attention is drawn to the document US-A-6 016 312, which refers to a radiotelephone in a radiotelephone system which enters a low power sleep mode and times the duration of the sleep mode using a sleep clock generator having a coarse resolution. The radiotelephone synchronizes timing of the radiotelephone to system timing using an oscillator having a fine resolution. The radiotelephone then exits the low power sleep mode synchronized with system timing.

## SUMMARY OF THE INVENTION

In accordance with the present invention a method and device for tracking the length of a sleep period within a mobile station using a sleep clock, as set forth in claims 1 and 14, are provided. Embodiments of the present invention are claimed in the dependent claims.

In accordance with a first aspect of the invention, a method is provided for tracking the length of a sleep period within a mobile station using a sleep clock. The method operates to precisely calibrate portions of the sleep period. In accordance with the method, a sleep period is initiated with the sleep period subdivided into a sequence of sub-periods each of known duration but wherein the durations of the sub-periods are not necessarily integer multiples of cycles of the sleep clock. Elapsed time is tracked within each individual sub-period of the sleep period using an integer sleep counter which tracks whole cycles of the sleep clock. Any remaining fractional portions of the cycles of the sleep mode clock not accounted for by the integer sleep counter are tracked using a fractional sleep counter, with the fractional sleep counter accumulating remaining fractional portions of sleep clock cycles from one sub-period to the next.

In an exemplary embodiment of the first aspect of the invention, the sub-periods of the sleep period are "catnaps". Within each catnap, the integer sleep counter is incremented downwardly on each cycle of the sleep clock. When the integer sleep counter reaches 0, the catnap is deemed to be complete. When the catnap is complete, a keypad of the mobile station is checked to determine whether a key has been pressed and, if so, the sleep period is terminated. Whenever the fractional counter overflows, a current value of the integer sleep counter is increased by a integer overflow portion of the fractional sleep counter such that the integer counter then accounts for the overflow. A current value of the fractional sleep counter is reset to be equal only to the remaining fractional portion, if any, of the previous fractional sleep counter value such that the fractional sleep counter continues to track remaining fractional portions of cycles of the sleep mode clock.

In accordance with a second aspect of the invention, a method is provided for compensating for frequency drift within a sleep clock signal used to time sleep periods during a slotted paging mode of operation of a wireless mobile station wherein the wireless mobile station receives signals from a base station having high timing accuracy. The method operates to iteratively adjust an estimate of the frequency drift during a sleep mode to enable effective frequency drift compensation. In accordance with the method, an initial frequency of the sleep clock signal is determined following power-up of the mobile station. A fixed frequency drift compensation factor representative of a difference between the initial frequency of the sleep clock signal and a predetermined nominal frequency (that eliminates truncation error) is then determined for computational convenience. A dynamic frequency error compensation factor representative of a difference between the initial frequency and a current dynamic frequency of the slow clock signal (which may vary due to temperature or aging) is estimated. Then, during the slotted mode of operation, the following steps are iteratively performed. The dynamic frequency error compensation factor is updated by determining an amount of timing slew between the mobile station and the base station, and then determining new values for the dynamic frequency compensation factor by applying a value representative of the amount of the slew to a feedback loop configured to provide a new dynamic frequency error compensation factor having a value selected to achieve a subsequent reduction in slew.

In an exemplary implementation, the sleep period length is converted into the number of sleep clocks using the dynamic frequency as the initial estimate. After each wakeup from a sleep period, the mobile station searches for an incoming signal from the base station. As timing is maintained at the base station with very high accuracy, any error made in the initial estimate of dynamic frequency (arising due to truncation effects or temperature-and aging-induced frequency drifts) will show up as a "slew" in the timing of the incoming signal. The quantity "slew" indicates the timing difference or offset that the mobile perceives after wakeup from sleep. Then a new value for the dynamic frequency compensation factor is determined by applying a value representative of the amount of the slew to a loop filter.

In a preferred implementation, the mobile station is configured to implement both the improved calibration method and the improved frequency drift estimation method. Apparatus embodiments of the invention are also provided.

## BRIEF DESCRIPTION OF THE DRAWINGS

The features, objects, and advantages of the invention will become more apparent from the detailed description set forth below when taken in conjunction with the drawings in which like reference characters identify correspondingly throughout and wherein:

FIG. 1 is a timing diagram illustrating a pair of consecutive sleep periods, each including one or more catnap periods, tracked in accordance with an exemplary method of the invention.

FIG. 2 is a flow chart illustrating the exemplary method of the invention.

FIG. 3 is a timing diagram illustrating various clock signals utilized by the exemplary method of FIG. 2.

FIG. 4 is a vector diagram illustrating certain timing values processed by the method of FIG.2.

FIG. 5 is a block diagram illustrating a feedback loop employed by the exemplary method of the invention to estimate frequency drift.

## DETAILED DESCRIPTION OF THE PREFERRED EMBODIMENTS

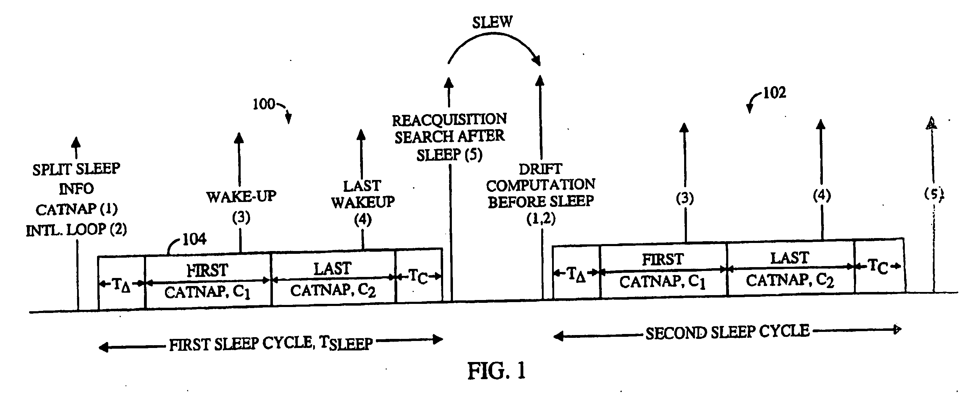

Referring to the figures, an exemplary embodiment of the invention will now be described. Initially, a method by which the exemplary embodiment operates to time a sleep period using a sleep-mode dock and to calibrate the end of the sleep period precisely with a next paging slot will be described with reference to FIGS. 1-3. The method operates to precisely calibrate the length of the sleep period despite frequency drift which may occur during the sleep period: Then, a method by which the exemplary embodiment operates to estimate the frequency drift will be described with reference to the remaining figures.

FIG. 1 is a timing diagram illustrating a pair of consecutive sleep periods 100 and 102 each subdivided into a set of sub-periods or "catnaps" generally denoted by reference numeral 104. During a period of time between each catnap, the mobile station wakes up only those components necessary to determine whether a key has been pressed on the key pad. In the example of FIG. 1, each sleep period includes only two catnaps. In other implementations a different number of catnaps may be employed. Each sleep period is timed primarily using only a sleep-mode clock having a relatively slow frequency, such as a 32 kilohertz clock. As will be described, a transition-mode clock having a substantially higher frequency than the sleep-mode clock is employed at the beginning and end of the sleep period to help calibrate the length of the sleep period. The length of the sleep period is not necessarily an integer number of cycles of the sleep clock. Likewise, the lengths of individual catnaps are not necessarily integer multiples of the sleep clock. To account for fractional portions of the sleep-mode clock, a fractional counter is employed. Also, the complete set of catnaps within the sleep period does not account for the entire period of time within the sleep period. Rather, an initial period of time $T_a$ occurs prior to the start of the first catnap and a final period of time $T_c$ occurs between the end of the last catnap and the end of the sleep period. The initial period $T_a$ occurs because of the first catnap does not begin until a first edge of the sleep-mode clock is detected and the first edge with may be offset from the start of the sleep period. The final time period $T_c$ is provided to permit the system to precisely calibrate the termination of the sleep period with a next paging slot by taking into account the fractional portions of sleep cycles counted using the fractional counter.

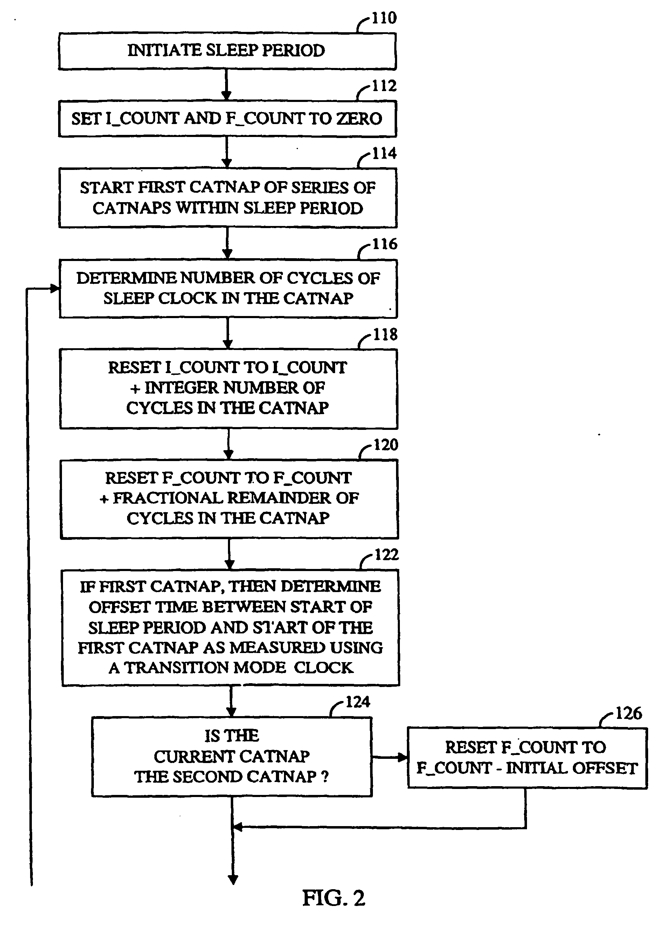

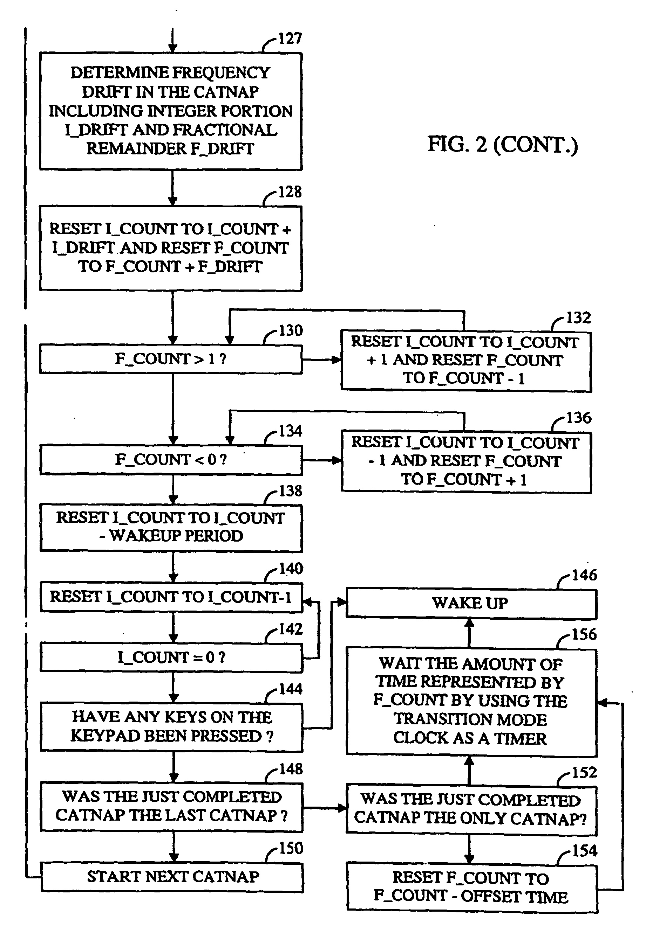

Referring now to FIG. 2, the method by which the mobile station determines the lengths of various catnaps and determines the amount of time $T_c$ necessary to precisely terminate the end of the sleep period with the next paging slot will now be described. The mobile station initiates the sleep period at step 110. At step 112, the integer counter (I_COUNTER) and the fractional counter (F_COUNT) are both set to 0. Then, at step 114, the first of a series of catnaps is initiated. The first catnap commences with a falling edge following the first detected rising edge of the sleep-mode clock which, as noted above, may be offset from the start time of the sleep period by an initial offset time $T_a$.

At step 116, the mobile station determines the number of cycles of the sleep clock within the current catnap based upon the length of the catnap. The length of the catnap is predetermined and values representative of the length may be stored in appropriate memory registers. Then, at step 118, the integer counter is reset to equal the previous value of the integer counter plus the integer number of cycles in the current catnap. Prior to the first execution of step 118, the integer counter is set to 0. Hence, following step 118, the integer counter is simply set to the number of whole cycles of the sleep clock occurring during the first catnap. At step 120, the fractional counter is set to equal the previous value of the fractional counter plus any fractional remainder of the cycles of the sleep mode clock in the catnap. Again, prior to the first execution of step 120, the fractional counter is initially set to 0 and hence, following step 120, the fractional counter is simply set to the fractional number of cycles remaining in the first catnap not accounted for by the integer number of cycles stored within the integer counter.

At step 122, if the current catnap is the first catnap, then the offset time $T_a$ between the start of the sleep period and the start of the first catnap is determined. In the preferred implementation, the duration of the offset time is determined by activating a high frequency transition-mode dock prior to the commencement of the sleep period, then counting the number of cycles in the transition-mode clock occurring between the start of the sleep period and the start of the first catnap. Further details regarding the transition-mode clock are provided in a co-pending U.S. Patent Application entitled "Method and Apparatus for Activating a High Frequency Clock Following a Sleep Mode within a Mobile Station Operating in a Slotted Paging Mode", filed contemporaneously herewith, assigned to the assignee of the present application.

At step 124, the mobile station then determines whether the current catnap is the second capnap and if so operates to subtract the initial offset time $T_a$ from the current value of the fractional counter in step 126. Hence, during a second catnap, the mobile station resets the fractional counter to compensate for the initial offset time. Continuing, though, with processing occurring during of the first catnap, execution proceeds directly from step 124 to step 126 wherein the mobile station determines the frequency drift in the first catnap. The manner by which the frequency drift is estimated will be described below.

The estimate of the frequency drift includes both an integer portion (I_DRIFT) and a fractional remainder portion (F_DRIFT). The integer portion represents the amount of frequency drift occurring within the catnap in whole cycles of the sleep-mode clock. The amount of frequency drift will not likely be precisely equal to an integer number of the sleep mode clock cycles. Any fractional remainder is represented by F_DRIFT. At step 128, the mobile station adds I_DRIFT to I_COUNT and also adds F_DRIFT to F_COUNT to thereby account for both the integer and fractional portions of the frequency drift. Following step 128, it is possible that the fractional counter will be greater than 1. Such may occur, for example, if the total of the fractional portion of the frequency drift determined at step 126 and the fractional portion of the duration of the catnap determined at step 120 collectively exceed one complete cycle of the sleep mode clock. To ensure that the fractional counter remains between 0 and 1.0, the mobile station determines, at step 130, whether the F_COUNT is greater than 1 and, if so, step 132 is performed wherein the integer counter is incremented by 1 and the fractional counter is decremented by 1. Following step 132, execution returns to step 130 wherein the mobile station again determines whether the fractional counter is greater than 1.0 and, if so, step 132 is repeated. In this manner, steps 130 and 132 are repeated in a loop until the fractional counter is reset to a value between 0 and 1.0.

On the other hand, following step 128, it is possible that the fractional counter will be less than 0. Such may occur if the frequency drift value is a negative value and is larger in magnitude than the fractional remainder determined at step 120. To ensure that the fractional counter remains between 0 and 1.0, the mobile station determines at step 134 whether F_COUNT is less than 0 and, if so, step 136 is performed wherein the integer counter is decremented by 1 and the fractional counter is incremented by 1. Following step 136, execution returns to step 134 wherein the mobile station determines whether the fractional counter is still negative and, if so, step 136 is repeated. In this manner, steps 134 and 136 are repeated in a loop until the fractional counter is reset to a value between 0 and 1.0.

At step 138, the mobile station accounts for any necessary wakeup time (or warm-up interval) required at the end of each catnap to allow the components of the mobile station to power up to detect whether any keys on the keypad have been pressed. Accordingly, at step 138, the mobile station determines the duration of the wakeup period in cycles of the sleep-mode clock then subtracts the wakeup period from the value currently held with an integer counter. The length of the wake up period is predetermined and values representative of the length may be stored in appropriate memory registers. Note that any fractional portion of the wakeup period is not separately accounted for. In other implementations, the wakeup period can be divided into an integer portion and a fractional portion with the fractional portion subtracted from the fractional counter as well.

Thus, following step 138, the integer counter contains a value indicating the number of cycles of the sleep-mode clock occurring between the beginning of the current catnap and the beginning of the wakeup period at the end of the catnap, adjusted, for example, to account for the frequency drift. Beginning at step 140, the mobile station times the catnap by subtracting 1 from the value of I_COUNT with each tick of the sleep-mode clock then, at step 142, checking to determine whether I_COUNT has reached 0. Once I_COUNT has reached 0, the point and time wherein components of the mobile station need to wakeup to facilitate any required processing at the end of the catnap has been reached. As step 144, the mobile station then begins waking up those components and, upon completion of the wakeup period, performs any necessary functions such as determining whether any of the keys on the key pad have been pressed. If any key has been pressed, or if the mobile station determines that any other processing is required, then the mobile station wakes up at step 146. Depending upon the implementation, this may involve powering up all remaining components of the mobile station or perhaps powering up only those components required to perform the particular required functions. In any case, the high-frequency clock is activated at step 146 and further sleep mode processing is terminated.

If, however, at step 144 the mobile station determines that no keys have been pressed and that no other action is required, then execution proceeds to step 148 wherein the mobile stations determines whether the just completed catnap was the last catnap of the sleep period. If not, then at step 150, the mobile station begins the next catnap causing execution to return to step 116 wherein the mobile station determines the number of cycles of the sleep clock within the new catnap and proceeds as described above.

In this manner, until either a key has been pressed or until the last catnap has been completed, the mobile station executes steps 116 - 150 in a continuous loop. Note that, although the integer counter I_COUNT will always be equal to 0 at the beginning of each catnap loop (i.e., at step 116) the fractional counter F_COUNT will typically not be equal to 0 at the beginning of any catnap other the first. Rather, the fractional counter will retain whatever previous fractional count was held therein. In this matter, the fractional counter accumulates fractional portions of sleep cycles from one catnap to the next. Eventually the fractional counter will likely overflow, i.e., the fractional counter will at some point be set to a value greater than 1.0. If so, then during a first subsequent execution of step 130, the overflow is accounted for by incrementing I_COUNT by 1 and by decrementing F_COUNT by 1. In this manner, upon the completion of each catnap, the fractional counter will again be equal to some value between 0 and 1.0. Thus, only fractional remainders of sleep cycles are carried from one catnap to the next and all integer portions are accounted for within each individual catnap. In other words, the duration of each catnap is calibrated to be within at least one sleep cycle of the intended catnap length.

Eventually, at step 148, the mobile station will detect that the just completed catnap is the last catnap and, if so, execution proceeds to step 152 or in the mobile station begins to account for the remaining period of time T, necessary to wake up the receive components of the mobile station in time for the next paging slot. In some circumstances, only a single catnap will occur within the sleep period, hence the last catnap is also the first catnap. Such may occur, e.g., when the mobile station is woken up due to a key pad event occurring during the first catnap. Earlier it was noted that during a second catnap, at steps 124 and 126, the fractional counter is reset to account for the initial offset time $T_a$. However, if there is only a single catnap, step 126 will not have been executed. Accordingly, the mobile station determines, at step 152 whether the just completed catnap was the only catnap and, if so, step 154 is performed to subtract the initial offset time from the current value of the fractional counter. In either case, execution proceeds to step 126 wherein the mobile station then reactivates the transition mode clock to time the remaining amount of time specified by the fractional counter and, when that period has elapsed, the mobile station then wakes up at step 146.

Thus, FIG. 2 illustrates a method whereby the mobile station precisely calibrates the length of the overall sleep period to wake up receive components of the mobile station just in time to receive a paging signal, if any, provided within the next paging slot. Hence, the receive components remain powered down for the maximum possible duration to thereby gain the maximum amount of power savings during the sleep period. Precise calibration is achieved, in part, using the aforementioned fractional sleep counter which accumulates fractional portions of complete cycles of the sleep clock from one catnap to the next to permit those fractional portions to be ultimately accounted for prior to wakeup of the receive components.

In the following, a specific example is described for use within a mobile station configured in accordance with IS-95A standard. According to the IS-95A standard, a CDMA mobile station or "subscriber station" operating in a slotted mode maximizes the standby time by going to sleep, based on a parameter, Slot Cycle Index (SCI). The subscriber station wakes up every ($1.28 * 2^{SCI}$) sec to monitor its assigned 80 ms slot to receive pages. For example with SCI = 0, the subscriber station ideally remains awake for 80 ms and sleeps for 1.2 sec. As noted above, the station must wake up a sufficient amount of time ahead of the next slot boundary so as to take care of events such as radio frequency (RF) component warm-up, synthesizer stabilization, clock settling, CDMA pilot search and acquisition, finger reassignment and decoder warm-up.

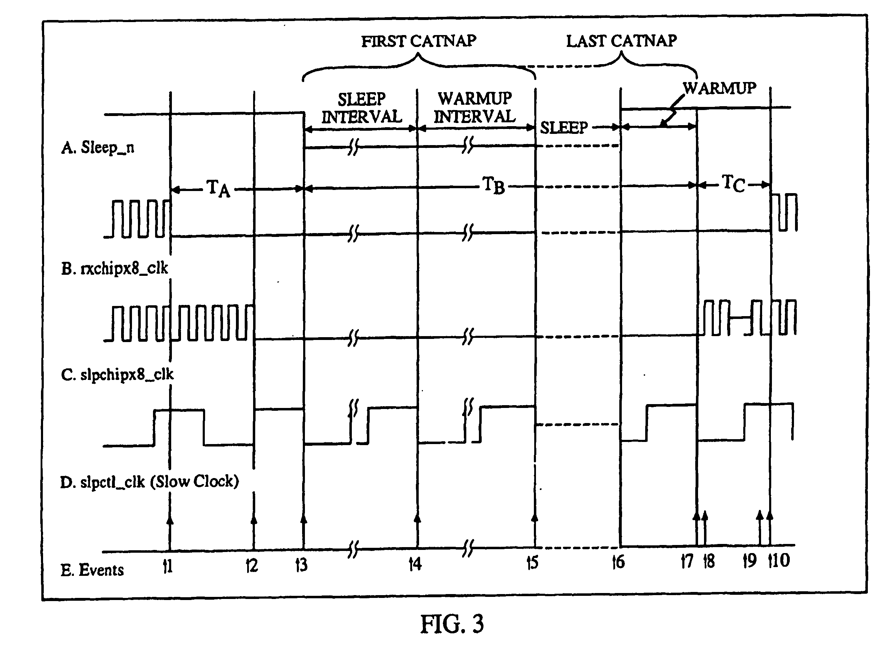

As shown in FIG. 3, in each sleep cycle the unit sleeps in catnaps to allow good response time if the user presses a key while it is asleep. The sleep cycle length and catnap length are chosen to be multiples of a psuedorandom number period $T_{PN}$ (also known as PN roll) so that upon wake-up, pilot may easily be found. $T_{PN}$ may be, for example, 26.67 milliseconds. Each catnap is further divided into: (1) "sleep time," when the entire unit is put to sleep and (2) "warm-up time," when the RF and analog units are turned on for warm-up. When the subscriber station is asleep, the system time is approximately maintained by clocking the counters that keep track of sleep duration with a combination of the sleep clock for coarse timing (maximum resolution of 1/60k = 16.7 micro-sec) and the transition mode clock (SLPCHIPX8) for fine timing (resolution of 1/(8*1.2288e6) = 0.102 micro-sec).

An example of the events that constitute a sleep cycle is shown in FIG. 3. Waveform E within the figure marks each event in the sleep cycle as follows:

- <u>Before t1</u>: When it is time to sleep, the software shuts off all unnecessary clock regimes except for the CDMA demodulator and a decoder clock regime, RXCHIPX8 (Waveform B).

- A catnap (which is a multiple of 26.67 ms) is split into sleep time and warm-up time and programmed as the duration of the first catnap interval through the SLEEP_INTERVAL and WU_TIME registers.

- Software writes an ASIC_SLEEP_ARM bit of a SLEEP_CTL register, indicating that subscriber station must go to sleep on the next PN roll (indicated by t1).

- All along, the sleep clock (Waveform D) runs asynchronous to a high frequency CDMA clock regime CHIPX8, while the SLPCHIPX8 (Waveform C) is in sync with the RXCHIPX8, having been derived from the same source, CHIPX8.

- <u>At time t1</u>: when a PN roll occurs, the RXCHIPX8 clock regime is disabled putting the subscriber station to sleep. It is from this point onwards that it is desirable for the sleep period to be very close to multiples of 26.67 ms using counters SLEEP_INTERVAL and WU_TIME running off the sleep clock. To account for the asynchronous sleep clock, a transition-mode counter called CHIPX8_SLEEP_TIME starts counting the SLPCHIPX8's that have elapsed from t1 to the next rising edge of the sleep clock.

- <u>At time t2</u>: the rising edge of sleep clock occurs at which time the SLPCHIPX8 clock regime is disabled, freezing the CHIPX8_SLEEP_TIME, there by providing an estimate of the time duration (t2-t1) in chipx8 units.

- <u>At time t3</u>: after half a sleep clock duration, a SLEEP_N signal (Waveform A) goes low on the falling edge of the sleep clock causing the other digital, analog and RF components in the phone to transition to a low power mode. If there are $N_{SC}$ chipx8's in a sleep clock cycle, the total time elapsed at this point of time is given by: $T_A = (t2-t1) + (t3-t2) = \{$ CHIPX8_SLEEP_TIME + _ $N_{SC}\}$ chipx8s. It may be noted that from this definition, $T_A$ will be in the range of _-1_ slow clock cycles. Subsequent catnaps are adjusted to account for this extra time slept owing to the asynchronous sleep crystal. Also a counter SLEEP_INTERVAL running off the sleep clock starts to counts down.

- <u>At time t4</u>: the counter SLEEP_INTERVAL asserts a wake-up interrupt when it reaches a zero count. The microprocessor wakes up sufficiently to determine if hardware needs to be awake at the next slot or to service a keypress event.

- If neither of these conditions is met, the software ensures that hardware can remain asleep by keeping the SLEEP_N signal active during the warm-up count down (via the WU_TIME counter). At this time, the software estimates the number of sleep clocks needed to sleep in the next catnap based on several factors such as next catnap length, asynchronous lag in the slow clock, drift and truncation errors that arise from the use of sleep clock to approximate a multiple of PN roll. The exact calibration procedure was summarized above and is further detailed below.

- At time t5: when the WU_TIME counter expires, a new value obtained in the previous step is loaded into the SLEEP_INTERVAL counter. The WU_TIME counter is a precomputed constant specified by a RF hardware warm-up requirements. The microprocessor goes back to sleep awaiting the wake-up interrupt from the next catnap.

- At time t6: If however there are any pending interrupts to be serviced or if this is the last catnap allowed in this sleep cycle, the hardware is woken up to be ready for the next slot by causing the SLEEP_N pin to go inactive at the wake-up interrupt. While the WU_TIME counter counts down, the analog and RF components warm up

- At time t7: the WU_TIME counter expires indicating the end of the last catnap and the SLPCHIPX8 regime is turned on at time t8. As a side note, the total time elapsed during all the catnaps, denoted by $T_B$ = t7-t3, will be close to integer multiple of sleep clocks. Due to the several factors mentioned previously that are used in the sleep calibration, there will usually be a residual amount of time (a fraction of sleep clock) for which the subscriber station needs to still remain asleep. This fractional sleep clock (denoted by $T_c$) is converted into chipx8 units and programmed into the CHIPX8_SLEEP_TIME that starts counting down clocked by the SLPCHIPX8.

- At time t9: the CHIPX8_SLEEP_TIME expires, and the hardware turns on the RXCHIPX8 at time t10. The last time duration of interest is $T_c$ = t9-t7.

Thus, one of the major goals of the calibration process is to ensure that the sleep cycle length $T_{SLEEP}$ = $T_A+T_B+T_C$ be a multiple of 26.67 ms.

As mentioned earlier, the sleep crystal is a low frequency and inexpensive oscillator, and therefore may have high frequency errors (on the order of $\pm 200$ ppm) due to factors such as temperature, aging and part tolerance. To meet a strict real-time deadline that is stipulated in the sleep mechanism of the IS-95A standard, it is important to have a good up-to-date estimate of the frequency of sleep clock before putting the subscriber station to sleep. A "Frequency Error Estimation circuit" (FEE) is used to provide running estimates of the frequency of slow clock. The FEE is used in the calibration in the following two different, but related ways.

The effective frequency of the slow clock $F_{SC}$ lies in the 30 - 60 kHz range, the exact value of which is specified by the subscriber station manufacturer. It is convenient to make the calibration independent of the exact sleep clock, hence the FEE is initially used to estimate the frequency of the slow clock every time the subscriber station is powered up.

The basic principle underlying the FEE is to count the number of chipx8's (which is a very stable clock tracking the system timing) that have elapsed in a slow clock period. As an example, assume that the manufacturer has chosen an oscillator whose actual frequency is $\hat{F}_{SC}$ = 32.76 KHz. Then, each sleep clock will have $\hat{N}_{SC}$ = 300.073 chipx8's/sleep clock. In order to accommodate the fractional chipx8's of significance in the counting process, the FEE actually counts the number of chipx8's in $L^{FEE}$ = 255 sleep clocks. The FEE continuously provides the chipx8 count once every $L^{FEE}$ sleep clock's as long is the subscriber station is awake.

As the accuracy of FEE is limited to only 1 chipx8 in $L^{FEE}$ slow docks, the resulting maximum quantization error is =1.44 Hz (24 ppm) at $\hat{F}_{SC}$ = 60 kHz. In order to smooth out the quantization error, a moving average window filter (MAW) of length $L^{MAW}$ = 256 FEE samples is used, which provides estimates of $\hat{F}_{SC}$ with near-zero quantization error. The filter length is a compromise between quantization error and response time. The advantage of using a MAW filter instead of integrate-and-dump type of averaging is that the MAW filter has a faster response for changes in the input frequency as it is updated with every FEE sample. Specifically, MAW provides one output every FEE output where as the integrate-and-dump filter gives one output every $L^{MAW}$ FEE samples. If $\hat{N}_{FEE}^{MAW}$ is the output of the MAW filter operating on the FEE outputs, then the initial estimate of the sleep clock frequency at power-up can be computed as:

$$F_{SC}^A = F_{CX8} \times L^{FEE} \times L^{MAW} / N_{FEE}^{MAW} \cdot Hz. \qquad Eq. 1$$

It is convenient to perform all the computations based on a constant nominal sleep clock frequency, rather than the variable $F_{SC}^A$. Hence, a nominal frequency is derived from the actual $F_{SC}^A$, such that:

$$F_{SC}^N = \lfloor F_{SC}^A / 75 \rfloor \times 75 \quad Hz \qquad Eq. 2$$

is a multiple of 75. $\lfloor X \rfloor$ and $\langle X \rangle$ respectively denote the integer and fractional portions of X. Because of this choice, the manufacturer specific frequency can deviate from the nominal frequency as much as $(F_{SC}^A - F_{SC}^N) < \pm 75/2 \ Hz \ (\pm 600 \quad ppm)$ and still be mapped to the same nominal frequency.

The dynamic frequency of sleep crystal is herein denoted by $F_{SC}^D$. After the initial use of FEE to estimate $F_{SC}^A$, $F_{SC}^D$ is also used during the slotted operation to estimate the difference $(F_{SC}^D - F_{SC}^A)$ using the MAW. The computations performed using the nominal slow clock frequency $F_{SC}^N$ are adjusted to account for the errors (1) due to difference in nominal and actual slow clock frequencies $(F_{SC}^A - F_{SC}^N)$ and (2) due to temperature variations $(F_{SC}^D - F_{SC}^A)$, via two "drift compensations" defined as follows:

- "Fixed Drift Compensation (FDC)" that adjusts for the fixed, known error $(F_{SC}^A - F_{SC}^N)$ incurred by using $F_{SC}^N$ instead of $F_{SC}^A$. The FDC needed per each PN roll can be shown to be equal to:

$$N_{FDC} = (1 - F_{SC}^N / F_{SC}^A) \times F_{CX8} \times T_{PN} \quad chipx8s/PN \ roll \qquad Eq. 3$$

- "Dynamic Drift Compensation (DDC)" that accounts for the dynamically varying frequency deviation of $(F_{SC}^D - F_{SC}^A)$ is similarly given by:

$$N_{DDC} = (1 - F_{SC}^N / F_{SC}^D) \times F_{CX8} \times T_{PN} - N_{FDC} \quad chipx8s/PN \ roll \qquad Eq. 4$$

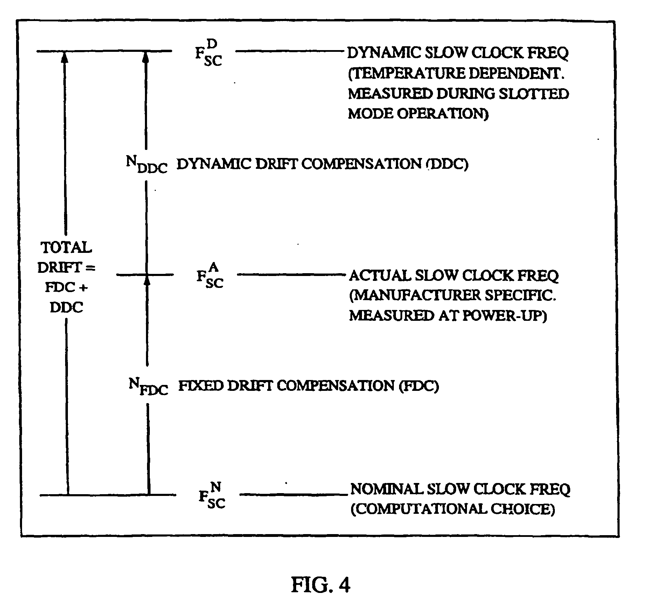

Under the assumption that the sleep crystal is operating at its nominal frequency of $F_{SC}^N \ Hz$, there will be $F_{CX8} / F_{SC}^N \ chipx8's/nom\_sleep \ clock$. Then, the amount error incurred in chipx8's for each nominal sleep clock when the sleep crystal is in reality operating at $F_{SC}^A \ Hz$ is $\left(\frac{1}{F_{SC}^A} - \frac{1}{F_{SC}^N}\right) \times F_{CX8} \ chipx8's/nom\_SC.$ The chipx8 error per PN roll or FDC of Eq. 3 is obtained by multiplying the preceding expression by: $F_{SC}^N \ nom\_SC/sec \times T_{PN} \ sec/PN \ roll$. The relationship between the two drift compensations is shown in FIG. 4. The sum of DDC and FDC constitutes the total drift compensation needed to adjust the $F_{SC}^N$ based computations. Note that instead of these two separate drifts, a single "total drift" can be defined based directly on the difference of the dynamic

and nominal frequencies $\left(\mathbf{F}_{SC}^{D} - \mathbf{F}_{SC}^{N}\right)$. However, the advantage of splitting the drift compensation is that the dynamic drift tends to have a small magnitude that can be filtered (if so desired) with out saturation and overflow problems.

At the beginning of each catnap, the catnap duration is rationed into (1) a maximum possible integer number of nominal sleep clock's that will be loaded into the SLEEP_INTERVAL and WU_TIME registers and (2) a fractional sleep clock that is stored and accumulated in the subsequent catnaps in a variable called "residual tick counter," $R_{TCK}$. Whenever $R_{TCK}$ "overflows" into an integer slow clock, it is reduced back to a fractional sleep clock, while the integer sleep clock is accounted in the SLEEP_INTERVAL register. During the sleep cycle, the subscriber station sleeps only for (SLEEP_INTERVAL + WU_TIME) slow docks in each catnap which is represented by the duration $T_B$ in FIG. 1 When it is time to wake up at the end of the last catnap, the final contents of $R_{TCK}$ represent the fractional slow clock duration that the subscriber station needs to sleep to make the sleep cycle a multiple of PN roll. This is achieved by programming the CHIPX8_SLEEP_TIME counter with the value of $R_{TCK}$ that makes up for the time $T_C$. The CHIPX8_SLEEP_TIME counter can accommodate a maximum of 3 sleep clock's when the frequency is lowest (= 32kHz), justifying our effort to keep $R_{TCK}$ under a sleep clock. Since by definition $R_{TCK}$ represents the extra time subscriber station needs to sleep, it is important to make sure that it remains positive.

Sleep computations are done at the constant nominal slow clock frequency, hence there is a need to account for the difference in the nominal and (the real) dynamic slow clock frequencies via the total drift compensation, FDC + DDC of the previous section. In practice, the DDC as computed in Eq. 5 at the end of an access attempt/call is used to initialize a second-order feedback loop that is designed to minimize the calibration error. For subsequent sleep cycles, the DDC is derived from the feedback loop as will be explained below.

1) Before every sleep cycle (t1):

    a) If there enough time to sleep before the next combiner PN roll, divide the sleep duration into multiple catnaps of lengths $C_1$, $C_2$ ...$C_M$ (i.e., there are M catnaps), such that $T_{SLEEP} = C_1 + C_2 + \cdots C_M$.

2) Before every sleep cycle (t1): Latest frequency drift estimates are obtained:

    a) If (first sleep cycle after end of access /call /analog), initialize the feedback loop with DDC of Eq. 4.

    b) If (not first sleep), update the feedback loop with slew determined in a previous sleep's re-acquisition search. Briefly, following each wakeup, the mobile station searches for signals transmitted from a base station. The timing of signals provided by the base station has a very high accuracy. Accordingly, any error made in a previous estimate of the dynamic frequency (perhaps arising due to trunction effects or temperature or aging-induced frequency drifts) appears as a slew in the timing of the incoming signal. Slew, herein, indicates the timing difference or offset between the timing of signals received from the base station and internal timing within the mobile station after wakeup from a sleep period.

    c) Compute DDC from feedback loop.

3) Before every catnap (t1, t4): Before the first catnap (t1) or upon wake-up on each subsequent catnaps (t4), if the subscriber station is allowed to sleep for the next catnap, the following calibration procedure is undertaken:

    a) If (first catnap): initialize SLEEP_COUNTER and $R_{TCX}$ :

$$\mathbf{SLEEP\_COUNTER} \leftarrow 0$$
$$R_{TCX} \leftarrow 0$$

    b) If (second catnap): By now, since subscriber station has already slept for an extra time $T_A$ (which is generally not an integer sleep clock), remove that amount from residual tick counter : $R_{TCK} \leftarrow R_{TCK} - T_A$

    c) Split catnap length $C_m$ into integer and fractional nominal sleep clock's $\lfloor X \rfloor_{SC}^{N}$, $\langle X \rangle_{SC}^{N}$ respectively denote the integer and fractional number of nominal sleep clock's in X:

$$\text{SLEEP\_COUNTER} \leftarrow \lfloor C_m \rfloor_{SC}^{W} + \text{SLEEP\_COUNTER}$$

$$R_{TCK} \leftarrow \langle C_m \rangle_{SC}^{N} + R_{TCK}$$

d) Compensate for the drift :

$$\text{SLEEP\_COUNTER} \leftarrow \lfloor N_{FDC} + N_{DOC} \rfloor_{SC}^{W} + \text{SLEEP\_COUNTER}$$

$$R_{TCK} \leftarrow \langle N_{FDC} + N_{DOC} \rangle_{SC}^{N} + R_{TCK}$$

e) If ($R_{TCK}$ "overflows") into an integer sleep clock, reduce it to a fractional sleep clock and account for the integer portion in the SLEEP_COUNTER register:

$$\text{SLEEP\_COUNTER} \leftarrow \lfloor R_{TCK} \rfloor_{SC}^{W} + \text{SLEEP\_COUNTER}$$

$$R_{TCK} \leftarrow \langle R_{TCK} \rangle_{SC}^{N}$$

f) If (residual ticks $R_{TCK}$ is negative): mainly due to the step 3.b, make it positive so that if subscriber station has to wake up in the next catnap, it programs a positive $R_{TCK}$ in the CHIPX8_SLEEP_TIME counter :

$$\text{SLEEP\_COUNTER} \leftarrow -1 + \text{SLEEP\_COUNTER}$$

$$R_{TCK} \leftarrow 1 + R_{TCK}$$

g) If (first catnap): before programming for the first catnap (at time t1 of Figure 3), the value of the extra time $T_A$(= _-1_ sleep clock's) that subscriber station sleeps is not yet known for use in calibrating the asynchronous sleep clock. If subscriber station has to wake up in the first catnap itself, the residual ticks need to be positive. To be on the safe side, adjust SLEEP_COUNTER and $R_{TCK}$ so as to sleep for two sleep clock's less in the first catnap:

$$\text{SLEEP\_COUNTER} \leftarrow -2 + \text{SLEEP\_COUNTER}$$

$$R_{TCK} \leftarrow 2 + R_{TCK}$$

h) Split the resulting catnap length into SLEEP_COUNTER and WU_TIME (a pre-computed constant based on RF warm-up time). In a specific subscriber station logic, the counters count extra over-head clocks in addition to the programmed values, which need to be accounted for. Between catnaps there is also one extra clock of overhead required by the state-machine to change state to enter sleep again :

$$\text{SSLEEP\_COUNTER} \leftarrow \text{SLEEP\_COUNTER} - \text{WARMUP\_TIME}$$

$$\text{SSLEEP\_COUNTER} \leftarrow \text{SLEEP\_COUNTER} - \text{OVERHEAD} - 1$$

4) Time to wake up (t7): In the last catnap, as the WU_TIME is counting down, the following computations are done:

a) If (first catnap): If subscriber station is required to wake-up after the first catnap (see 3.g), the control does not get to 3.b where an adjustment is made for $T_A$. So the time $T_A$ is accounted for in the residual ticks as: $R_{TCK} \leftarrow R_{TCK} - T_A$. The operation 3.g ensures that $R_{TCK}$ is positive.

b) The CHIPX8_SLEEP_TIME is loaded with $R_{TCK}$ (in chipx8's) and counted down at chipx8, to eventually wake up the subscriber station.

5) Re-acquisition upon wake up (t10):

a) The preceding calibration process ensures that the subscriber station sleeps for an integer number of PN rolls with very high accuracy (depends on the drift estimation). Consequently, the searcher should find the pilot with minimal offset relative to its position before sleep. Any error in the drift compensation shows up as "re-acquisition slew".

b) The re-acquisition slew is stored to be used later in the next sleep cycle to run the feedback loop to modify or correct the DDC as will be shown in the next section.

As noted above, the FEE is initially used to estimate the manufacturer specific sleep crystal's frequency $\mathbf{F_{SC}^A}$ from which the nominal frequency $\mathbf{F_{SC}^N}$ is derived. After the initial frequency estimation, if the subscriber station goes to the access/traffic channels/AMPS system, its internal temperature could increase considerably resulting in the dynamic frequency $\mathbf{F_{SC}^D}$ to differ from its initial estimate. To handle this situation, the FEE is used to estimate the dynamic frequency drift every time the unit returns to the slotted-paging mode.

However, this "one time" estimation of the dynamic drift at the beginning of slotted mode is not typically sufficient since the change in the frequency may occur over several sleep cycles as the unit cools off to its ambient temperature. Furthermore, changes in ambient temperature occur as well.

It can be shown that a given error made in the drift compensation of the calibration results in a proportional pilot-drift (or re-acquisition slew wake-up. For example, if the subscriber station had to sleep for $\tau$ chipx8's and a calibration error resulted in only $(\tau-\delta)$ chipx8's worth of sleep, the searcher will see the pilot drift by $\delta$ chipx8's upon wake-up. This fact is utilized in setting up a feedback loop that adaptively modifies the dynamic drift compensation (UDC) to minimize any error.

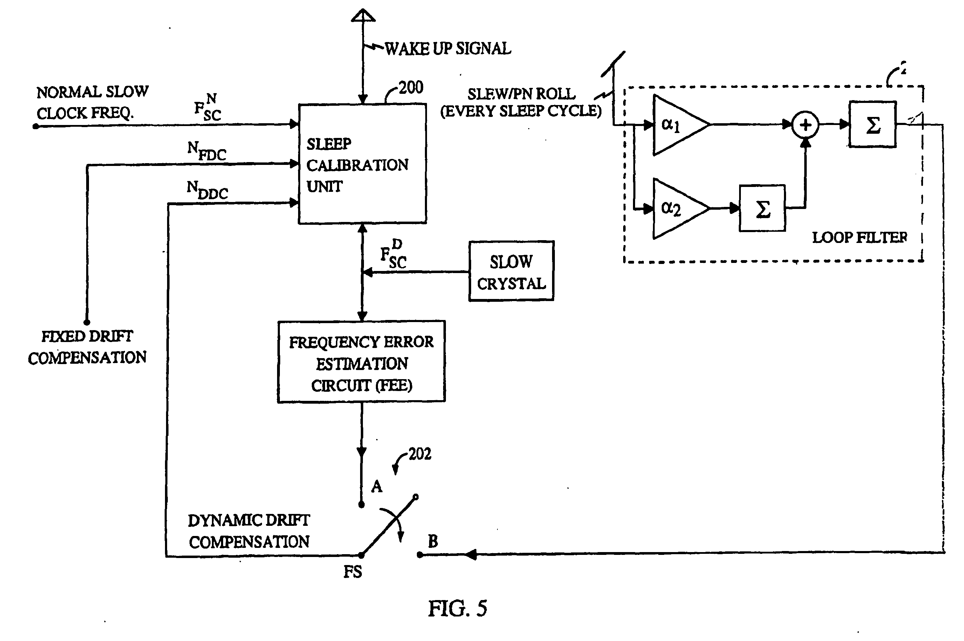

FIG. 5 is a functional block diagram of the feedback loop. The calibration process described above is performed by a sleep calibration unit 200, which accepts the following four external inputs:

1. Slow crystal's dynamic frequency $\mathbf{F_{SC}^D}$, which is to be tracked,

2. Nominal slow clock frequency $\mathbf{F_{SC}^N}$, a constant after the power-up estimation,

3. Fixed drift compensation $N_{FDC}$, a constant after power-up estimation, and

4. Dynamic drift compensation $N_{DDC}$, which is the tracking variable.

The sleep calibration unit employs these values in the sleep calculation equations described above to determine when to wake up other components of the mobile station for receiving paging signals or for handling other required tasks. As part of the sleep calculations, the sleep calibration unit counts cycles of the slow sleep clock during sleep periods. The sleep calibration unit eventually outputs a wake up signal that is used by other components of the mobile station.

The sleep calibration unit is employed with a feedback loop provided to compensate for drift in the slow clock crystal frequency so that the wake up signal is issued in synchronization with paging signals issued by the base station to minimize pilot reacquisition time. Hence, the aim of the feedback mechanism is to use $\mathbf{F_{SC}^N}$, $N_{FDC}$, $N_{DDC}$ to derive an adjusted value for $N_{DDC}$ (used in the sleep calculations described above) to compensate for changes in the slow crystal frequency $\mathbf{F_{SC}^D}$.

FIG. 5 also shows a conceptual flip-switch (FS) 202 that determines the source of $N_{DDC}$. Every time the subscriber station leaves the slotted-paging mode (due to reasons detailed above) the switch is set to position 'A'.

Consequently, the FEE supplies the initial estimate of the dynamic drift once the station comes back to the slotted-paging mode. After thus initializing the loop, the switch is moved to position 'B' and stays there as long as the unit is in slotted-paging mode. While in position B, a loop filter 204 supplies a corrected estimate of $N_{DDC}$.

At each paging slot, the mobile station performs a pilot re-acquisition process to reacquire the pilot signal from the nearest base station. Once the pilot is reacquired, a precise timing value is received from the base station representative of the true time. As noted above, any offset between the timing values provided by the base station and timing values as determined within the mobile station is slew: The amount of slew is determined based upon a comparison of the respective timing signals of the mobile station and the base station. The slew is evaluated as a slew per PN roll. A signal representative of the slew per PN roll is applied to the feedback loop filter every sleep cycle. The loop filter calculates an adjusted value for the $N_{DDC}$ based upon the current value of the slew/PN roll and from pre-determined loop values described below. The adjusted value of $N_{DDC}$ is then applied to the SLEEP_COUNTER as described above in section 3.d to compensate for any drift in the sleep mode clock. Note that the value for $N_{DDC}$ is not applied directly to the loop filter. Rather, only the current value of the slew is applied. Nevertheless, with proper selection of the pre-determined values used in the loop filter, the filter outputs an adjusted value of $N_{DDC}$. The adjusted value is determined by the loop filter so that the amount of slew in the next pilot reacquisition cycle should be less than before. With repeated iterations, $N_{DDC}$ converges on a substantially fixed numeric value having a value sized to ensure that the slew is near zero. Iterative reduction of the slew to near zero typically occurs very quickly following the re-entry of the mobile station into the slotted-paging mode. Thereafter, the feedback loop provides any slight adjustments to $N_{DDC}$ to maintain the slew near zero. In this manner, the wake up signal output by the sleep calibration unit remains substantially in synch with paging slots of the base station so that pilot reacquisition time is minimized.

The appropriate values for use in the feedback loop to reduce the slew to near zero and to maintain it near zero depend upon the particular characteristics of the mobile station, the sleep clock and the overall wireless system and are determined, for each particular embodiment, via routine experiments or other conventional techniques. Also, the choice of the order of the loop filter is dependent on the type of input frequency transient that needs to be tracked. If the slow crystal only has a constant frequency uncertainty, a first order loop is sufficient to track the constant frequency offset. However, in practice the frequency transient has a parabolic shape which makes a second or third order loop filter more desirable. For small slot-cycle-indices most often used in practice (SCI =0,1,2), the frequency transient is approximated very well by a simple ramp function, which is tracked with minimal steady state error by a second order loop.

If the loop is iterated every sleep duration with the slew $S \leftrightarrow T_{SLEEP}$ seen in that sleep duration, the sampled loop gains ($\dot{a}_1$, $\dot{a}_2$) can be expressed in terms of the loop noise band-width $B_L$ and damping ratio $\zeta$ of an equivalent continuous time feedback loop given by:

$$\dot{a}_1 = 2\zeta \cdot \sqrt{\dot{a}_2} + \dot{a}_2/2 \quad \text{where,}$$

$$\dot{a}_2 = (4.B_L - 1) \times (T_{SLEEP})^2 \qquad \text{Eq. 5}$$

where $B_L$ and $\zeta$ can be chosen according to the input signal and noise characteristics. The "noise" in the loop arises due to the fluctuations in the pilot position in a multi-path and fading environment.

The expressions for the sampled loop gains given in Eq. 5 are valid under the assumption that the loop is uniformly sampled, i.e., if and only if the loop iteration interval $T_{SLEEP}$ remains constant. For a given SCI, the sleep duration can be expressed as: $T_{SLEEP} = 2^{SCI} \times 1.28 - T_{ACTIVE}$, where $T_{ACTIVE}$ is the time spent by subscriber station demodulating the paging channel when it is awake. Since $T_{ACTIVE}$ depends on the length of the paging channel messages, there is no guarantee for some implementations that $T_{SLEEP}$ is a constant. Consequently, for those implementations, because the loop is non-uniformly updated in time, the continuous time feedback loop approximation to a sampled loop that gave rise to Eq. 9 may require adjustment.

Although the sleep cycle duration varies randomly varying, it is at substantially least guaranteed to be a multiple of PN roll. This fact is exploited to formulate a loop configuration with a frequency error defined as slew/PN roll ($S \leftrightarrow T_{PN}$) instead of the slew/sleep cycle ($S \leftrightarrow T_{SLEEP}$) and update the loop filter at sleep cycle length $T_{SLEEP}$. For implementations where the sleep cycle is only a PN roll long, the loop gains can be expressed as:

$$\dot{a}_1 = 2\zeta \cdot \sqrt{\dot{a}_2} + \dot{a}_2/2 \quad \text{where,}$$

$$\dot{a}_2 = (4.B_L - 1) \times (T_{PN})^2 : \qquad \text{Eq. 6}$$

The loop gains so computed for a single PN roll sleep cycles can be used for other sleep lengths $T_{SLEEP}$ while keeping in mind that the effective loop noise band-width is no longer $B_L$ and is dependent on the SCI.

Table I provides a summary of the various variables employed in connection with the above descriptions.

| Variable | Definition | Comments | Value |
|---|---|---|---|
| $F_{SC}$ | Frequency range of Slow Crystal (sleep clock) | | 30-60 kHz or 1.92 to 3.84 MHz |
| $F_{CXB}$ | Frequency of CHIPX8 clock | 8*1.2288 MHz | 9.8304 MHz |
| $T_{PN}$ | Duration of a PN roll | | 26.67 ms |
| $T_A$ | Time needed to calibrate the asynchronous Slow clock | | _-1_ sleep clock |
| $T_B$ | Time slept during catnaps | | Integer PN rolls |
| $T_C$ | Residual time needed to make sleep length a multiple of PN roll | | Fractional sleep clock |
| $T_{SLEEP}$ | Sleep cycle duration | $T_A + T_B + T_C$ | Integer PN rolls |
| $\dot{F}_{SC}^A$ | Actual frequency of sleep clock | Phone Manufacturer specific | E.g. 32.76 kHz |
| $F_{SC}^N$ | Nominal frequency of sleep clock | Computational convenience (Eq. 2) | 32.7 kHz |
| $\dot{F}_{SC}^D$ | Dynamic frequency of sleep clock | Temperature dependent | E.g. 320 kHz |
| $F_{SC}^{D-E}$ | Estimated dynamic frequency of sleep clock | Estimated by feedback loop | |
| $N_{SC}^A$ | No of chipx8's in actual sleep clock | $F_{CX8} / F_{SC}^A$ | E.g. 300.073 chipx8/sleep clock |
| $L^{FEE}$ | No of sleep dock counted by FEE | | 255 sleep clock's |
| $L^{MAW}$ | Length of the MAW filter | Design choice | 256 FEE's |
| $N_{FEE}^{MAW}$ | The output of the MAW filter operating on the $L^{FEE}$ FEE outputs | | |
| $F_{TC}$ | Actual frequency of TC | $F_{CX8} / 2$ | 4.2952 MHz |
| $F_{TC}^N$ | Nominal frequency of TC | Defined to perform high precision computations with a low frequency clock. Eq. 3 | E.g. 4.905 MHz |
| $N_{FDC}$ | Fixed Drift Compensation (FDC) | To compensate for fixed difference $(F_{SC}^A - F_{SC}^N)$ | |
| $N_{DDC}$ | Dynamic Drift Compensation (DDC) | To compensate for dynamic difference $(F_{SC}^D - F_{SC}^A)$ | |
| $R_{TCK}$ | Residual tick counter | Accumulates fractional sleep clock's from all catnaps. | Positive and less than a sleep clock. |
| $C_m$ | Length of the $m^{th}$ catnap | | Integer PN rolls |
| $\Delta F_{SC}^D$ | Error in feedback loop estimate | $F_{SC}^D - F_{SC}^{D-E}$ | |

(continued)

| Variable | Definition | Comments | Value |
|---|---|---|---|
| S | Reacquisition slew/sec seen at the end of a sleep cycle | Proportional to error $\mathbf{\Delta F_{SC}^{D}}$ | |
| $(á_1, á_2)$ | Loop filter gains of the digital loop | | |
| $(B_L \zeta)$ | Loop noise bandwidth and damping ratio of an equivalent continuous loop | | |
| SCI | Slot Cycle Index | IS-95 A Standard | 0 through 7 |

The exemplary embodiments have been primarily described with reference to block diagrams and flow charts illustrating pertinent features of the embodiments. As the flow charts, each step therein represents both a method step and an apparatus element for implementing the method step. The apparatus element may represent a means for implementing the method step, an apparatus for implementing the method step or other structural element for implementing the method step. It should be appreciated that not all components of a complete implementation of a practical system are necessarily illustrated or described in detail. Rather, only those components necessary for a thorough understanding of the invention have been illustrated and described. Actual implementations may contain more components or, depending upon the implementation, fewer components. The description of the exemplary embodiments is provided to enable any person skilled in the art to make or use the present invention. Various modifications to these embodiments will be readily apparent to those skilled in the art and the generic principles defined herein may be applied to other embodiments without the use of the inventive faculty. Thus, the invention is not intended to be limited to the embodiments shown herein but is to be accorded the widest scope consistent with the principles and novel features disclosed herein.

## Claims

1. A method for tracking the length of a sleep period (100,102) within a mobile station using a sleep clock, said method comprising the steps of:

    initiating (110) a sleep period (100,102) subdivided into a sequence of sub-periods (104) each of known duration;
    tracking the elapsed time within each individual sub-period (104) of the sleep period using an integer sleep counter which tracks whole cycles of the sleep clock; and
    tracking any remaining fractional portions of the cycles of the sleep mode clock not accounted for by the integer sleep counter using a fractional sleep counter, said fractional sleep counter accumulating remaining fractional portions of sleep mode cycles from one sub-period (104) to the next.

2. The method of claim 1 wherein, within each sub-period (104), the integer sleep counter is incremented downwardly on each cycle of the sleep clock and wherein, when the integer sleep counter reaches zero, the sub-period (104) is deemed to be complete.

3. The method of claim 1 wherein, when a sub-period (104) is deemed to be complete, a keypad of the mobile station is checked to determine whether a key has been pressed and, if a key has been pressed, the sleep period is terminated.

4. The method of claim 2 wherein at the beginning of a first sub-period (104) the fractional sleep counter and the integer sleep counter are both set to zero (112).

5. The method of claim 2 wherein a number of cycles of the sleep clock corresponding to the known duration of each sub-sleep period is determined (116) and
   wherein, within each respective sub-period (104):

    a current value of the integer sleep counter is increased (118) by an integer portion of the number of cycles of the sleep clock determined to correspond to the known duration of the respective sub-period (104) such that the integer counter tracks the approximate duration of the respective sub-period (104); and

a current value of the fractional sleep counter is increased (120) by a fractional portion of the number of cycles of the sleep clock determined to correspond to the known duration of the respective sub-sleep period such that fractional portions of the respective sub-period (104) are accumulated along with previous fractional portions from previous sub-periods (104), if any.

6. The method of claim 2 wherein a number of cycles of the sleep clock corresponding to a predetermined amount of frequency drift occurring within each sub-period period is determined (127) and wherein for each respective sub-period (104);

a current value of the integer sleep counter is adjusted (128) by an integer portion of the number of cycles of the sleep clock determined to correspond to the predetermined frequency drift occurring within the respective sub-period (104) such that the integer counter compensates approximately for the frequency drift; and

a current value of the fractional sleep counter is adjusted (128) by a fractional portion of the number of cycles of the sleep clock determined to correspond to the predetermined frequency drift occurring within the respective sub-period (104) such that fractional portions of the frequency drift for the respective sub-period (104) are accumulated along with previous fractional portions from previous sub-periods (104), if any.

7. The method of claim 4 further including the step of determining, prior to the initiation of the sleep period, an amount of frequency drift expected in the sleep clock for each sub-period (104) of the sleep period (100,102).

8. The method of claim 2 wherein, whenever the fractional sleep counter overflows:

a current value of the integer sleep counter is increased (132) by an integer overflow portion of the fractional sleep counter such that the integer counter accounts for the overflow; and

a current value of the fractional sleep counter is reset (132) to equal only the remaining fractional portion, if any, of the previous fractional sleep counter value such that the fractional sleep counter continues to track any remaining fractional portions of cycles of the sleep mode clock.

9. The method of claim 2 wherein a first sub-period (104) begins some time following the beginning of the sleep period and wherein at the beginning of a second sub-period (104) the fractional sleep counter is decreased (154) by an amount necessary to compensate for the time period between the beginning of the sleep period and the beginning of the first sub-period (104).

10. The method of claim 9 wherein, whenever the fractional sleep counter is below zero (134):

a current value of the integer sleep counter is reduced (136) by one; and

a current value of the fractional sleep counter is increased (136) by one.

11. The method of claim 2 wherein, during each respective sub-period (104) of the sleep period (100, 102):

a current value of the integer sleep counter is reduced (138) by an integer portion of a predetermined wakeup period duration value such that the integer sleep counter expires before the end of each sub-period (104) to leave sufficient time to permit components of the mobile station to be powered up by the end of the sub-period (104).

12. The method of claim 2 wherein, following a final sub-period (104), a transition mode clock counter having a frequency substantially greater than that of the sleep clock is activated (156) to track any remaining time represented by the fractional sleep counter such that any remaining portions of the sleep period (100, 102) are tracked.

13. The method of claim 12 wherein a first sub-period (104) begins some time following the beginning of the sleep period (100, 102) and wherein, if the first sub-period (104) of the sleep period (100, 102) is also the final sub-period (104), the fractional sleep counter is decreased (154) by an amount necessary to compensate for the time period between the beginning of the sleep period and the beginning of the first sub-period (104) prior to activation of the transition mode clock.

14. A device for tracking the length of a sleep period (100,102) whithin a mobile station using a sleep clock, said device comprising:

means for initiating a sleep period subdivided into a sequence of sub-periods (104) each of known duration;

means for tracking the elapsed time within each individual sub-period (104) of the sleep period (100,102) using an integer sleep counter which tracks whole cycles of the sleep clock; and

means for tracking any remaining fractional portions of the cycles of the sleep mode clock not accounted for by the integer sleep counter using a fractional sleep counter, said fractional sleep counter accumulating fractional portions of sleep mode cycles from one sub-period (104) to the next.

15. The device of claim 14 wherein, within each sub-period (104), the integer sleep counter is incremented downwardly on each cycle of the sleep clock and wherein, when the integer sleep counter reaches zero, the ub-period (104) is deemed to be complete.

16. The device of claim 14 further including means, operative when a sub-period (104) is deemed complete, for determining whether a key has been pressed on a keypad of the mobile station and, if a pressed key is detected, for terminating the sleep period (100, 102).

17. The device of claim 14 wherein at the beginning of a first sub-period (104) of the sleep period (100, 102) the fractional sleep counter and the integer sleep counter are both set to zero.

18. The device of claim 15 further including

means for determining a number of cycles of the sleep clock corresponding to the known duration of each sub-sleep period; and

means, operative during each respective sub-period (104), for increasing a current value of the integer sleep counter by an integer portion of the number of cycles of the sleep clock determined to correspond to the known duration of the respective sub-period (104) such that the integer counter approximately tracks the duration of the respective sub-period (104); and

increasing a current value of the fractional sleep counter is by a fractional portion of the number of cycles of the sleep clock determined to correspond to the known duration of the respective sub-period (104) such that fractional portions of the respective sub-period (104) are accumulated along with fractional portions from previous sub-periods (104), if any.

19. The device of claim 15 further including

means for determining a number of cycles of the sleep clock corresponding to a predetermined amount of frequency drift occurring within each sub-period period; and

means, operative during each respective sub-period (104), for adjusting a current value of the integer sleep counter by an integer portion of the number of cycles of the sleep clock determined to correspond to the pre-determined frequency drift occurring within the respective sub-period (104) such that the integer counter compensates approximately for the frequency drift; and

adjusting a current value of the fractional sleep counter by a fractional portion of the number of cycles of the sleep clock determined to correspond to the predetermined frequency drift occurring within the respective sub-period (104) such that fractional portions of the frequency drift value are accumulated along with fractional portions from previous sub-periods (104), if any.

20. The device of claim 19 further including means for determining a frequency drift value for the sleep clock prior to the initiation of the sleep period (100,102).

21. The device of claim 15 further including means, operative whenever the fractional sleep counter overflows, for increasing a current value of the integer sleep counter by an integer overflow portion of the fractional sleep counter such that the integer counter accounts for the overflow; and

resetting a current value of the fractional sleep counter to equal only the remaining fractional portion, if any, of the previous frequency sleep counter value such that the fractional sleep counter continues to track any remaining fractional portions of cycles of the sleep mode clock.

22. The device of claim 15 wherein the means for initiating the sleep period (100, 102) operates to initiate a first sub-period (104) some time following the beginning of the sleep period (100,102) and wherein the device further includes means, operative during a second sub-period (104) of the sleep period, for increasing the fractional sleep counter by an amount necessary to compensate for the time period between the beginning of the sleep period (100,102) and the beginning of the first sub-period (104).

**23.** The device of claim 22 further including means, operative whenever the fractional sleep counter is less than zero, for decreasing a current value of the integer sleep counter by one; and increasing a current value of the fractional sleep counter by one.

**24.** The device of claim 15 further including means, operative during each respective sub-period (104) of the sleep period (100,102), for decreasing a current value of the integer sleep counter by an integer portion of a predetermined wakeup period duration value such that the integer sleep counter expires before the end of each sub-period (104) to leave sufficient time to permit components of the mobile station to be powered up by the end of the sub-period (104).

**25.** The device of claim 15 further including means, operative following a final sub-period (104), for activating a transition mode clock counter having a frequency substantially greater than that of the sleep clock to track any remaining time represented by the fractional sleep counter such that any remaining fractional portions of the sleep period (100, 102) are tracked.

**26.** The device of claim 25 wherein the means for initiating the sleep period (100,102) operates to initiate a first sub-period (104) some time following the beginning of the sleep period (100,102) and wherein the device further includes means, operative if the first sub-period (104) of the sleep period (100,102) is also the final sub-period (104), for increasing the fractional sleep counter by an amount necessary to compensate for the time period between the beginning of the sleep period (100,102) and the beginning of the first sub-period (104) prior to activation of the transition mode clock.

**27.** The device of claim 14, wherein said means for initiating a sleep period (100,102) comprises a sleep mode activation unit for initiating a sleep period (100,102) subdivided into a sequence of sub-periods (104) each of known duration; wherein said means for tracking comprises an integer sleep counter for tracking the elapsed time within each individual sub-period of the sleep period, said integer sleep counter tracking whole cycles of the sleep clock; and wherein said means for tracking any remaining fractional portions comprises a fractional sleep counter for tracking any remaining fractional portions of the cycles of the sleep mode clock not accounted for by the integer sleep counter, said fractional sleep counter cumulating fractional portions of sleep mode cycles from one sub-period (104) to the next.

**Patentansprüche**

**1.** Ein Verfahren zum Erfassen bzw. Nachverfolgen der Länge einer Schlafperiode (100, 102) innerhalb einer Mobilstation unter Verwendung eines Schlaftakts, wobei das Verfahren die folgenden Schritte aufweist:

Initiieren (110) einer Schlafperiode (100, 102) unterteilt in eine Sequenz von Unterperioden (104), von denen jede eine bekannte Dauer besitzt;
Verfolgen der abgelaufenen Zeit innerhalb einer jeden einzelnen Unterperiode (104) der Schlafperiode unter Verwendung eines ganzzahligen Schlafzählers, der ganze Zyklen des Schlaftaktes erfasst; und
Nachverfolgen von jeglichen verbleibenden Bruchteilen der Zyklen des Schlafmodustakts, die nicht von dem ganzzahligen Schlafzähler berücksichtigt wurden, unter Verwendung eines Bruchteilsschlafzählers, wobei der Bruchteilsschlafzähler verbleibende Bruchteile von Schlafmoduszyklen von einer Unterperiode (104) zu der nächsten akkumuliert.

**2.** Verfahren nach Anspruch 1, wobei innerhalb einer jeden Unterperiode (104) der ganzzahlige Schlafzähler mit jedem Zyklus des Schlaftaktes nach unten inkrementiert wird und wobei, wenn der ganzzahlige Schlafzähler Null erreicht, die Unterperiode (104) als vervollständigt betrachtet wird.

**3.** Verfahren nach Anspruch 1, wobei, wenn eine Unterperiode (104) als vervollständigt angesehen wird, ein Tastenfeld der Mobilstation überprüft wird, um zu bestimmen, ob eine Taste gedrückt wurde, und wenn eine Taste gedrückt wurde, die Schlafperiode beendet wird.

**4.** Verfahren nach Anspruch 2, wobei zu Beginn einer ersten Unterperiode (104) der Bruchteilsschlafzähler und der ganzzahlige Schlafzähler beide auf Null gesetzt werden (112).

**5.** Verfahren nach Anspruch 2, wobei eine Anzahl von Zyklen des Schlaftaktes entsprechend zu der bekannten Dauer einer jeden Unterschlafperiode bestimmt wird (116), und wobei innerhalb einer jeden jeweiligen Unterperiode (104):

ein momentaner Wert des ganzzahligen Schlafzählers erhöht wird (118) um einen ganzzahligen Teil der Anzahl von Zyklen des Schlaftaktes, und zwar bestimmt entsprechend zu der bekannten Dauer der jeweiligen Unterperiode (104), so dass der ganzzahlige Zähler die ungefähre Dauer der jeweiligen Unterperiode (104) nachverfolgt; und

ein momentaner Wert des Bruchteilsschlafzählers erhöht wird (120) um einen Bruchteil der Anzahl von Zyklen des Schlaftaktes, und zwar bestimmt entsprechend zu der bekannten Dauer der jeweiligen Unterschlafperiode, so dass die Bruchteile der jeweiligen Unterperiode (104) akkumuliert werden zusammen mit vorhergehenden Bruchteilen von vorhergehenden Unterperioden (104), wenn vorhanden.

6. Verfahren nach Anspruch 2, wobei eine Anzahl von Zyklen des Schlaftaktes entsprechend eines vorbestimmten Betrags von auftretendem Frequenzdrift innerhalb einer jeden Unterperiode bestimmt wird, und wobei für jede jeweilige Unterperiode (104):

ein momentaner Wert des ganzzahligen Schlafzählers angepasst wird (128) durch einen ganzzahligen Teil der Anzahl von Zyklen des Schlaftaktes, und zwar bestimmt entsprechend zu der vorbestimmten Frequenzdrift, die innerhalb einer jeweiligen Unterperiode (104) auftritt, so dass der ganzzahlige Zähler ungefähr hinsichtlich der Frequenzdrift kompensiert; und

ein momentaner Wert des Bruchteilsschlafzählers angepasst wird (128) um einen Bruchteil der Anzahl von Zyklen des Schlaftaktes, und

zwar bestimmt entsprechend zu der vorbestimmten Frequenzdrift, die innerhalb der jeweiligen Unterperiode (104) auftritt, so dass die Bruchteile der Frequenzdrift für die jeweilige Unterperiode (104) akkumuliert werden zusammen mit vorhergehenden Bruchteilen von vorhergehenden Unterperioden (104), wenn vorhanden.

7. Verfahren nach Anspruch 4, das weiterhin den Schritt des Bestimmens, und zwar vor der Initiierung der Schlafperiode, eines Betrages der Frequenzdrift, die in dem Schlaftakt für jede Unterperiode (104) der Schlafperiode (100, 102) erwartet wird.

8. Verfahren nach Anspruch 2, wobei, wenn der Bruchteilsschlafzähler überläuft:

ein momentaner Wert des ganzzahligen Schlafzählers erhöht wird (132) um einen ganzzahligen Überlaufteil des Bruchteilsschlafzählers, so dass der ganzzahlige Zähler den Überlauf berücksichtigt; und

ein momentaner Wert des Bruchteilsschlafzählers zurückgesetzt wird (132), um gleich zu sein nur zu dem verbleibenden Bruchteil, wenn vorhanden, des vorhergehenden Bruchteilsschlafzählerwerts, so dass der Bruchteilsschlafzähler damit fortfährt, jegliche verbleibende Bruchteile der Zyklen des Schlafmodustaktes zu erfassen bzw. nachzuverfolgen.

9. Verfahren nach Anspruch 2, wobei eine erste Unterperiode (104) eine gewisse Zeit nachfolgend zu dem Beginn der Schlafperiode beginnt, und wobei zu Beginn einer zweiten Unterperiode (104) der Bruchteilsschlafzähler um einen Betrag gesenkt wird (154), der nötig ist, um für die Zeitperiode zwischen dem Beginn der Schlafperiode und dem Beginn der ersten Unterperiode (104) zu kompensieren.

10. Verfahren nach Anspruch 9, wobei, wann immer der Bruchteilsschlafzähler unter Null liegt (134):

ein momentaner Wert des ganzzahligen Schlafzählers um eins reduziert wird (136); und
ein momentaner Wert des Bruchteilsschlafzählers erhöht wird um eins (136).

11. Verfahren nach Anspruch 2, wobei während jeder jeweiligen Unterperiode (104) der Schlafperiode (100, 102):

ein momentaner Wert des ganzzahligen Schlafzählers reduziert wird (138) um einen ganzzahligen Teil eines vorbestimmten Aufwachperiodendauerwertes, so dass der ganzzahlige Schlafzähler vor dem Ende einer jeden Unterperiode (104) ausläuft, um eine ausreichende Zeit zu belassen, um es Komponenten der Mobilstation zu erlauben, bis zu dem Ende der Unterperiode (104) angeschaltet bzw. mit Energie versorgt zu werden.

12. Verfahren nach Anspruch 2, wobei, nachfolgend zu einer abschließenden Unterperiode (104), ein Übergangsmodustaktzähler mit einer Frequenz, die im Wesentlichen größer ist als diejenige des Schlaftaktes, aktiviert wird (156), um jegliche verbleibende Zeit repräsentiert durch den Bruchteilsschlafzähler nachzuverfolgen, so dass jegliche verbleibende Teile der Schlafperiode (100, 102) nachverfolgt werden.

13. Verfahren nach Anspruch 12, wobei eine erste Unterperiode (104) eine gewisse Zeit nachfolgend zum Beginn der Schlafperiode (100, 102) beginnt, und wobei, wenn die erste Unterperiode (104) der Schlafperiode (100, 102) ebenfalls die abschließende Unterperiode (104) ist, der Bruchteilsschlafzähler gesenkt wird (154) um einen Betrag nötig, um für die Zeitperiode zwischen dem Beginn der Schlafperiode und dem Beginn der ersten Unterperiode (104) vor der Aktivierung des Übergangsmodustaktes zu kompensieren.

14. Eine Vorrichtung zum Erfassen bzw. Nachverfolgen der Länge einer Schlafperiode (100, 102) innerhalb einer Mobilstation unter Verwendung eines Schlaftaktes, wobei die Vorrichtung Folgendes aufweist:

Mittel zum Initiieren einer Schlafperiode unterteilt in eine Sequenz von Unterperioden (104), von denen jede eine bekannte Dauer besitzt;
Mittel zum Nachverfolgen der abgelaufenen Zeit innerhalb einer jeden individuellen Unterperiode (104) der Schlafperiode (100, 102) unter Verwendung eines ganzzahligen Schlafzählers, der ganze Zyklen des Schlaftaktes nachverfolgt; und
Mittel zum Nachverfolgen jeglicher verbleibender Bruchteile der Zyklen des Schlafmodustaktes, die nicht von dem ganzzahligen Schlafzähler berücksichtigt werden, unter Verwendung eines Bruchteilsschlafzählers, wobei der Bruchteilsschlafzähler Bruchteile der Schlafmoduszyklen von einer Unterperiode (104) zu der nächsten akkumuliert.

15. Vorrichtung nach Anspruch 14, wobei, innerhalb einer jeden Unterperiode (104), der ganzzahlige Schlafzähler nach unten für jeden Zyklus des Schlaftaktes inkrementiert wird, und wobei, wenn der ganzzahlige Schlafzähler Null erreicht, die Unterperiode (104) als vollständig erklärt wird.

16. Vorrichtung nach Anspruch 14, wobei die Vorrichtung weiterhin Mittel aufweist, die operativ sind, wenn eine Unterperiode (104) als vervollständigt betrachtet wird, zum Bestimmen, ob eine Taste auf einem Tastenfeld der Mobilstation gedrückt wurde, und, wenn eine gedrückte Taste detektiert wird, zum Beenden der Schlafperiode (100, 102).

17. Vorrichtung nach Anspruch 14, wobei zu Beginn einer ersten Unterperiode (104) der Schlafperiode (100, 102) der Bruchteilsschlafzähler und der ganzzahlige Schlafzähler beide auf Null gesetzt werden.

18. Vorrichtung nach Anspruch 15, die weiterhin Folgendes aufweist:

Mittel zum Bestimmen einer Anzahl von Zyklen des Schlaftaktes entsprechend zu der bekannten Dauer einer jeden Unterschlafperiode; und
Mittel, operativ während einer jeden jeweiligen Unterperiode (104) zum Erhöhen eines momentanen Wertes des ganzzahligen Schlafzählers, um einen ganzzahligen Teil der Anzahl von Zyklen des Schlaftaktes, und zwar bestimmt entsprechend zu der bekannten Dauer der jeweiligen Unterperiode (104), so dass der ganzzahlige Zähler ungefähr die Dauer der jeweiligen Unterperiode (104) nachverfolgt; und
Nachverfolgen eines momentanen Wertes des Bruchteilsschlafzählers um einen Bruchteil der Anzahl von Zyklen des Schlaftaktes, und zwar bestimmt entsprechend zu der bekannten Dauer der jeweiligen Unterperiode (104), so dass die Bruchteile der jeweiligen Unterperiode (104) akkumuliert werden zusammen mit Bruchteilen von vorhergehenden Unterperioden (104), wenn vorhanden.

19. Vorrichtung nach Anspruch 15, die weiterhin Folgendes aufweist:

Mittel zum Bestimmen einer Anzahl von Zyklen des Schlaftaktes entsprechend zu einem vorbestimmten Betrag einer Frequenzdrift, die innerhalb einer jeden Unterperiode bzw. Unterperiodendauer auftritt; und
Mittel, operativ während einer jeden jeweiligen Unterperiode (104) zum Anpassen eines momentanen Werts des ganzzahligen Schlafzählers um einen ganzzahligen Teil der Anzahl von Zyklen des Schlaftaktes, und zwar bestimmt, um der vorbestimmten Frequenzdrift zu entsprechen, die innerhalb der jeweiligen Unterperiode (104) auftritt, so dass der ganzzahlige Zähler ungefähr hinsichtlich der Frequenzdrift kompensiert; und
Anpassen eines momentanen Werts des Bruchteilsschlafzählers um einen Bruchteil der Anzahl von Zyklen des Schlaftaktes, und zwar bestimmt, um der vorbestimmten Frequenzdrift zu entsprechen, die innerhalb der jeweiligen Unterperiode (104) auftritt, so dass die Bruchteile des Frequenzdriftwertes akkumuliert werden zusammen mit Bruchteilen von vorhergehenden Unterperioden (104), wenn vorhanden.

**20.** Vorrichtung nach Anspruch 19, die weiterhin Mittel aufweist zum Bestimmen eines Frequenzdriftwertes für den Schlaftakt vor der Initiierung der Schlafperiode (100, 102).

**21.** Vorrichtung nach Anspruch 15, die weiterhin Mittel aufweist operativ wann immer der Bruchteilsschlafzähler überläuft zum
Erhöhen eines momentanen Wertes des ganzzahligen Schlafzählers um einen ganzzahligen Überlaufteil des Bruchteilsschlafzählers, so dass der ganzzahlige Zähler den Überlauf berücksichtigt; und
Zurücksetzen eines momentanen Wertes des Bruchteilsschlafzählers gleich zu dem verbleibenden Bruchteil, wenn vorhanden, des vorhergehenden Frequenzschlafzählerwertes, so dass der Bruchteilsschlafzähler damit fortfährt, jegliche verbleibende Bruchteile von Zyklen des Schlafmodustaktes zu erfassen bzw. nachzuverfolgen.

**22.** Vorrichtung nach Anspruch 15, wobei die Mittel zum Initiieren der Schlafperiode (100, 102) operieren, um eine erste Unterperiode (104) zu initiieren, und zwar eine gewisse Zeit vor dem Beginn der Schlafperiode (100, 102), und wobei das Gerät weiterhin Mittel aufweist operativ während einer zweiten Unterperiode (104) der Schlafperiode zum Erhöhen des Bruchteilsschlafzählers um einen Betrag, der nötig ist, um für die Zeitperiode zwischen dem Beginn der Schlafperiode (100, 102) und dem Beginn der ersten Unterperiode (104) zu kompensieren.

**23.** Vorrichtung nach Anspruch 22, die weiterhin Mittel aufweist, die operativ sind, wann immer der Bruchteilsschlafzähler kleiner ist als Null, zum
Senken eines momentanen Wertes des ganzzahligen Schlafzählers um eins; und
Erhöhen eines momentanen Wertes des Bruchteilsschlafzählers um eins.

**24.** Vorrichtung nach Anspruch 15, die weiterhin Mittel aufweist operativ während einer jeden jeweiligen Unterperiode (104) der Schlafperiode (100, 102), zum
Senken eines momentanen Wertes des ganzzahligen Schlafzählers um einen ganzzahligen Teil eines vorbestimmten Aufwachperiodendauerwertes, so dass der ganzzahlige Schlafzähler ausläuft vor dem Ende einer jeden Unterperiode (104), um eine ausreichende Zeit zu belassen, um es Komponenten der Mobilstation zu erlauben, vor dem Ende der Unterperiode (104) eingeschaltet zu werden.

**25.** Vorrichtung nach Anspruch 15, die weiterhin Mittel aufweist operativ nachfolgend zu einer abschließenden Unterperiode (104) zum Aktivieren eines Übergangsmodustaktzählers mit einer Frequenz, die wesentlich größer ist als die des Schlaftaktes, um jegliche verbleibende Zeit repräsentiert durch den Bruchteilsschlafzähler zu erfassen, so dass jegliche verbleibende Bruchteile der Schlafperiode (100, 102) nachverfolgt werden.

**26.** Vorrichtung nach Anspruch 25, wobei die Mittel zum Initiieren der Schlafperiode (100, 102) betrieben werden, um eine erste Unterperiode (104) zu initiieren, und zwar eine gewisse Zeit nachfolgend zu dem Beginn der Schlafperiode (100, 102), und wobei das Gerät weiterhin Mittel aufweist operativ, wenn die erste Unterperiode (104) der Schlafperiode (100, 102) ebenfalls die abschließende Unterperiode (104) ist, und zwar zum Erhöhen des Bruchteilsschlafzählers um einen Betrag, der nötig ist, um hinsichtlich der Zeitperiode zwischen dem Beginn der Schlafperiode (100, 102) und dem Beginn der ersten Unterperiode (104) vor der Aktivierung des Übergangsmodustaktes zu kompensieren.

**27.** Vorrichtung nach Anspruch 14, wobei die Mittel zum Initiieren einer Schlafperiode (100, 102) eine Schlafmodusaktivierungseinheit aufweisen zum Initiieren einer Schlafperiode (100, 102) unterteilt in eine Sequenz von Unterperioden (104), die jeweils eine bekannte Dauer besitzen;
wobei die Mittel zum Nachverfolgen einen ganzzahligen Schlafzähler aufweisen zum Nachverfolgen der abgelaufenen Zeit innerhalb einer jeden individuellen Unterperiode der Schlafperiode, wobei der ganzzahlige Schlafzähler ganze Zyklen des Schlaftaktes nachverfolgt; und
wobei die Mittel zum Nachverfolgen jeglicher verbleibender Bruchteile einen Bruchteilsschlafzähler aufweisen zum Nachverfolgen jeglicher verbleibender Bruchteile der Zyklen des Schlafmodustaktes, die nicht von dem ganzzahligen Schlafzähler berücksichtigt wurden bzw. werden, wobei der Bruchteilsschlafzähler Bruchteile der Schlafmoduszyklen von einer Unterperiode (104) zur der nächsten akkumuliert bzw. ansammelt.

**Revendications**

**1.** Procédé pour suivre la durée d'une période de sommeil (100, 102) dans un poste mobile en utilisant une horloge de sommeil, ce procédé comprenant les étapes suivantes :

initier (110) une période de sommeil (100, 102) subdivisée en une séquence de sous-périodes (104), ayant chacune une durée connue ;

suivre la durée écoulée à l'intérieur de chaque sous-période (104) individuelle de la période de sommeil en utilisant un compteur de sommeil entier qui suit des cycles complets de l'horloge de sommeil ; et

suivre toutes parties fractionnaires restantes des cycles d'horloge en mode sommeil qui n'ont pas été prises en compte par le compteur de sommeil entier en utilisant un compteur de sommeil fractionnaire, le compteur de sommeil fractionnaire accumulant des parties fractionnaires restantes des cycles en mode sommeil d'une sous-période (104) à la suivante.

2. Procédé selon la revendication 1, dans lequel, dans chaque sous-période (104), le compteur de sommeil entier est décrémenté à chaque cycle de l'horloge de sommeil et dans lequel, quand le compteur de sommeil entier atteint zéro, la sous-période (104) est considérée comme achevée.

3. Procédé selon la revendication 1, dans lequel, quand une sous-période (104) est considérée comme achevée, un clavier du poste mobile est vérifié pour déterminer si une touche a été pressée et, si une touche a été pressée, la période de sommeil est achevée.

4. Procédé selon la revendication 2, dans lequel au début de la première sous-période (104), le compteur de sommeil fractionnaire et le compteur de sommeil entier sont tous deux remis à zéro (112).

5. Procédé selon la revendication 2, dans lequel un nombre de cycles de l'horloge de sommeil correspondant à la durée connue de chaque sous-période de sommeil est déterminé (116) et dans lequel, dans chaque sous-période (104) respective :

une valeur courante du compteur de sommeil entier est augmentée (118) d'une partie entière du nombre de cycles de l'horloge de sommeil déterminé pour correspondre à la durée connue de la sous-période (104) respective de sorte que le compteur entier suit la durée approchée de la sous-période (104) respective ; et

une valeur courante du compteur de sommeil fractionnaire est augmentée (120) d'une partie fractionnaire du nombre de cycles de l'horloge de sommeil déterminé pour correspondre à la durée connue de la sous-période de sommeil de sorte que les parties fractionnaires de la sous-période (104) respectives sont accumulées avec les parties fractionnaires des sous-périodes (104) précédentes, s'il y en a.

6. Procédé selon la revendication 2, dans lequel un nombre de cycles de l'horloge de sommeil correspondant à une quantité prédéterminée de glissement de fréquence survenant dans chaque durée de sous-période est déterminé (127), et dans lequel, pour chaque sous-période (104) respective :

une valeur courante du compteur de sommeil entier est réglée (128) par une partie entière du nombre de cycles de l'horloge de sommeil déterminé pour correspondre au glissement de fréquence prédéterminé survenant durant la sous-période (104) respective de sorte que le compteur entier compense approximativement le glissement de fréquence ; et

une valeur courante du compteur de sommeil fractionnaire est réglée (128) d'une partie fractionnaire du nombre de cycles de l'horloge de sommeil déterminé pour correspondre au glissement de fréquence prédéterminé survenant pendant la sous-période (104) respective de sorte que les périodes fractionnaires du glissement de fréquence pour la sous-période (104) respective sont accumulées avec les parties fractionnaires précédentes des sous-périodes (104) précédentes, s'il y en a.

7. Procédé selon la revendication 4, comprenant en outre l'étape consistant à déterminer, avant le début de la période de sommeil une quantité de glissement de fréquence attendue dans l'horloge de sommeil pour chaque sous-période (104) de la période de sommeil (100, 102).

8. Procédé selon la revendication 2, dans lequel, chaque fois que le compteur de sommeil fractionnaire déborde :

la valeur courante du compteur de sommeil entier est augmentée (132) de la partie de dépassement entière du compteur de sommeil fractionnaire de sorte que le compteur entier tient compte du débordement ; et

la valeur courante du compteur de sommeil fractionnaire est remise à zéro (132) pour être égale seulement à la partie fractionnaire restante, s'il y en a, de la valeur du compteur de sommeil fractionnaire précédente de sorte que le compteur de sommeil fractionnaire continue à suivre toute partie fractionnaire restante des cycles de l'horloge en mode sommeil.

**9.** Procédé selon la revendication 2, dans lequel une première sous-période (104) commence un certain temps après le début de la période de sommeil et dans lequel, au début d'une seconde sous-période (104), le compteur de sommeil fractionnaire est réduit (154) d'une quantité nécessaire pour compenser la durée entre le début de la période de sommeil et le début de la première sous-période (104).

**10.** Procédé selon la revendication 9, dans lequel, chaque fois que le compteur de sommeil fractionnaire est en dessous de zéro (134) :

une valeur courante du compteur de sommeil entier est réduite (136) d'une unité ; et
une valeur courante du compteur de sommeil fractionnaire est augmentée (136) d'une unité.

**11.** Procédé selon la revendication 2, dans lequel, pendant chaque sous-période (104) respective de la période de sommeil (100, 102), la valeur courante du compteur de sommeil entier est réduite (138) d'une partie entière d'une valeur de durée de période d'éveil prédéterminée de sorte que le compteur de sommeil entier expire avant la fin de chaque sous-période (104) pour laisser une durée suffisante pour permettre aux composants du poste mobile d'être alimentés par la fin de la sous-période (104).

**12.** Procédé selon la revendication 2, dans lequel, après une sous-période (104) finale, un compteur d'horloge en mode de transition ayant une fréquence sensiblement supérieure à celle de l'horloge de sommeil est activé (156) pour suivre toute durée restante représentée par le compteur de sommeil fractionnaire de sorte que toute partie restante de la période de sommeil (100, 102) est suivie.

**13.** Procédé selon la revendication 12, dans lequel une première sous-période (104) commence quelque temps après le début de la période de sommeil (100, 102) et dans lequel, si la première sous-période (104) de la période de sommeil (100, 102) est également la sous-période (104) finale, le compteur de sommeil fractionnaire est diminué (154) d'une quantité nécessaire pour compenser la durée entre le début de la période de sommeil et le début de la première sous-période (104) avant activation de l'horloge en mode transition.

**14.** Dispositif pour suivre la durée d'une période de sommeil (100, 102) dans un poste mobile en utilisant une horloge de sommeil, ce dispositif comprenant :

des moyens pour initier une période de sommeil subdivisée en une séquence de sous-périodes (104), ayant chacune une durée connue ;
des moyens pour suivre la durée écoulée à l'intérieur de chaque sous-période (104) individuelle de la période de sommeil en utilisant un compteur de sommeil (100, 102) entier qui suit des cycles complets de l'horloge de sommeil ; et
des moyens pour suivre toutes parties fractionnaires restantes des cycles d'horloge en mode sommeil qui n'ont pas été prises en compte par le compteur de sommeil entier en utilisant un compteur de sommeil fractionnaire, le compteur de sommeil fractionnaire accumulant des parties fractionnaires restantes des cycles en mode sommeil d'une sous-période (104) à la suivante.

**15.** Dispositif selon la revendication 14, dans lequel, dans chaque sous-période (104), le compteur de sommeil entier est décrémenté à chaque cycle de l'horloge de sommeil et dans lequel, quand le compteur de sommeil entier atteint zéro, la sous-période (104) est considérée comme achevée.

**16.** Dispositif selon la revendication 14, comprenant des moyens agissant quand une sous-période (104) est considérée comme achevée, pour déterminer si une touche a été pressée sur un clavier du poste mobile et, si une touche pressée est détectée, pour arrêter la période de sommeil (100, 102).

**17.** Dispositif selon la revendication 14, dans lequel au début de la première sous-période (104), le compteur de sommeil fractionnaire et le compteur de sommeil (100, 102) entier sont tous deux remis à zéro.

**18.** Dispositif selon la revendication 15, comprenant en outre :

des moyens pour déterminer un nombre de cycles de l'horloge de sommeil correspondant à la durée connue de chaque sous-période de sommeil ; et
des moyens agissant pendant chaque sous-période (104) respective pour :

augmenter la valeur courante du compteur de sommeil entier d'une partie entière du nombre de cycles de l'horloge de sommeil déterminé pour correspondre à la durée connue de la sous-période (104) respective de sorte que le compteur entier suit approximativement la durée de chaque sous-période (104) respective ; et

augmenter la valeur courante du compteur de sommeil fractionnaire d'une partie fractionnaire du nombre de cycles de l'horloge de sommeil déterminé pour correspondre à la durée connue de la sous-période (104) respective, de sorte que des parties fractionnaires de la sous-période (104) respective sont accumulées avec les parties fractionnaires des sous-périodes (104) précédentes, s'il y en a.

**19.** Dispositif selon la revendication 15, comprenant en outre :

des moyens pour déterminer un nombre de cycles de l'horloge de sommeil correspondant à une quantité prédéterminée de glissement de fréquence survenant dans chaque durée de sous-période ; et
des moyens agissant pendant chaque sous-période (104) respective pour :

régler une valeur courante du compteur de sommeil entier d'une partie entière du nombre de cycles de l'horloge de sommeil déterminé pour correspondre au glissement de fréquence prédéterminé survenant pendant la sous-période (104) respective de sorte que le compteur entier compense approximativement le glissement de fréquence ; et
régler la valeur courante du compteur de sommeil fractionnaire d'une partie fractionnaire du nombre de cycles de l'horloge de sommeil déterminé pour correspondre au glissement de fréquence prédéterminé survenant dans la sous-période (104) respective de sorte que des parties fractionnaires de la valeur de glissement de fréquence sont accumulées avec des parties fractionnaires des sous-périodes (104) précédentes, s'il y en a.

**20.** Dispositif selon la revendication 19, comprenant en outre des moyens pour déterminer une quantité de glissement de fréquence, avant le début de la période de sommeil (100, 102).

**21.** Dispositif selon la revendication 15, comprenant en outre des moyens, agissant chaque fois que le compteur de sommeil fractionnaire déborde, pour :

augmenter la valeur courante du compteur de sommeil entier de la partie de dépassement entière du compteur de sommeil fractionnaire de sorte que le compteur entier tient compte du débordement ; et
remettre à zéro la valeur courante du compteur de sommeil fractionnaire pour être égale seulement à la partie fractionnaire restante, s'il y en a, de la valeur du compteur de sommeil fractionnaire précédente de sorte que le compteur de sommeil fractionnaire continue à suivre toute partie fractionnaire restante des cycles de l'horloge en mode sommeil.

**22.** Dispositif selon la revendication 15, dans lequel les moyens pour initier la période de sommeil (100, 102) agissent pour initier une première sous-période (104), un certain temps après le début de la période de sommeil (100, 102), et dans lequel le dispositif comprend en outre des moyens, agissant pendant une seconde sous-période (104) de la période de sommeil, pour augmenter le compteur de sommeil fractionnaire d'une quantité propre à compenser la durée entre le début de la période de sommeil (100, 102) et le début de la première sous-période (104).

**23.** Dispositif selon la revendication 22, comprenant en outre des moyens agissant chaque fois que le compteur de sommeil fractionnaire est inférieur à zéro pour :

diminuer la valeur courante du compteur de sommeil entier d'une unité ; et
augmenter la valeur courante du compteur de sommeil fractionnaire d'une unité.

**24.** Dispositif selon la revendication 15, comprenant en outre des moyens agissant, pendant chaque sous-période (104) respective de la période de sommeil (100, 102), pour réduire la valeur courante du compteur de sommeil entier d'une valeur de durée de période d'éveil prédéterminée de sorte que le compteur de sommeil entier expire avant la fin de chaque sous-période (104) pour laisser une durée suffisante pour permettre aux composants du poste mobile d'être alimentés par la fin de la sous-période (104).

**25.** Dispositif selon la revendication 15, comprenant en outre des moyens agissant, après une sous-période (104) finale, pour activer un compteur d'horloge en mode de transition ayant une fréquence sensiblement supérieure à celle de l'horloge de sommeil pour suivre toute durée restante représentée par le compteur de sommeil fractionnaire de sorte que toute partie restante de la période de sommeil (100, 102) est suivie.

26. Dispositif selon la revendication 25, dans lequel les moyens pour initier la période de sommeil (100, 102) agissent pour initier une première sous-période (104) quelque temps après le début de la période de sommeil (100, 102), et agissant pour, si la première sous-période (104) de la période de sommeil (100, 102) est également la sous-période (104) finale, augmenter le compteur de sommeil fractionnaire d'une quantité nécessaire pour compenser la durée entre le début de la période de sommeil (100, 102) et le début de la première sous-période (104) avant activation de l'horloge en mode transition.

27. Dispositif selon la revendication 14, dans lequel :

les moyens pour initier une période de sommeil (100, 102) comprennent un module d'activation de mode de sommeil pour initier une période de sommeil (100, 102) subdivisée en une séquence de sous-périodes (104) ayant chacune une durée connue ;
les moyens de suivi comprennent un compteur de sommeil entier pour suivre le temps écoulé dans chaque sous-période individuelle de la période de sommeil, le compteur de sommeil entier suivant des cycles complets de l'horloge de sommeil ; et
dans lequel les moyens de suivi de toutes les parties restantes comprennent un compteur de sommeil fractionnaire pour suivre toute partie fractionnaire restante des cycles de l'horloge en mode sommeil non prise en compte par le compteur de sommeil entier, le compteur de sommeil fractionnaire cumulant des parties fractionnaires des cycles de mode sommeil d'une sous-période (104) à la suivante.

FIG. 1

FIG. 2

FIG. 2 (CONT.)

**127**
DETERMINE FREQUENCY DRIFT IN THE CATNAP INCLUDING INTEGER PORTION I_DRIFT AND FRACTIONAL REMAINDER F_DRIFT

**128**
RESET I_COUNT TO I_COUNT + I_DRIFT AND RESET F_COUNT TO F_COUNT + F_DRIFT

**130**
F_COUNT > 1 ?

**132**
RESET I_COUNT TO I_COUNT + 1 AND RESET F_COUNT TO F_COUNT - 1

**134**
F_COUNT < 0 ?

**136**
RESET I_COUNT TO I_COUNT - 1 AND RESET F_COUNT TO F_COUNT + 1

**138**
RESET I_COUNT TO I_COUNT - WAKEUP PERIOD

**140**
RESET I_COUNT TO I_COUNT-1

**142**
I_COUNT = 0 ?

**144**
HAVE ANY KEYS ON THE KEYPAD BEEN PRESSED ?

**146**
WAKE UP

**156**
WAIT THE AMOUNT OF TIME REPRESENTED BY F_COUNT BY USING THE TRANSITION MODE CLOCK AS A TIMER

**148**
WAS THE JUST COMPLETED CATNAP THE LAST CATNAP ?

**152**
WAS THE JUST COMPLETED CATNAP THE ONLY CATNAP?

**150**
START NEXT CATNAP

**154**
RESET F_COUNT TO F_COUNT - OFFSET TIME

28

FIG. 3

$F_{SC}^{D}$ ———————— DYNAMIC SLOW CLOCK FREQ
(TEMPERATURE DEPENDENT.
MEASURED DURING SLOTTED
MODE OPERATION)

$N_{DDC}$ DYNAMIC DRIFT COMPENSATION (DDC)

TOTAL
DRIFT =        $F_{SC}^{A}$ ———————— ACTUAL SLOW CLOCK FREQ
FDC +                                  (MANUFACTURER SPECIFIC.
DDC                                   MEASURED AT POWER-UP)

$N_{FDC}$ FIXED DRIFT COMPENSATION (FDC)

$F_{SC}^{N}$ ———————— NOMINAL SLOW CLOCK FREQ
(COMPUTATIONAL CHOICE)

FIG. 4

LOOP FILTER

$\Sigma$

$\Sigma$

$\alpha_1$

$\alpha_2$

WAKE UP SIGNAL

SLEW/PN ROLL
(EVERY SLEEP CYCLE)

200

SLEEP
CALIBRATION
UNIT

SLOW
CRYSTAL

$F_{SC}^D$

FREQUENCY ERROR
ESTIMATION
CIRCUIT (FEE)

202

A

B

FS

DYNAMIC DRIFT
COMPENSATION

$F_{SC}^N$

$N_{FDC}$

$N_{DDC}$

NORMAL SLOW
CLOCK FREQ.

FIXED DRIFT
COMPENSATION

FIG. 5